# EUROPEAN PATENT APPLICATION

(11) **EP 4 503 269 A1**
(43) Date of publication of application: **05.02.2025**
(21) Application number: 23780655.9
(22) Date of filing: 29.03.2023
(51) Int. Cl.: H01M 10/6555, H01M 10/625, H01M 10/651, H01M 10/6567, H01M 10/658, H01M 50/204, H01M 50/249, H01M 50/291

(54) **PARTITIONING MEMBER AND BATTERY ASSEMBLY**

(30) Priority: 30.03.2022 JP 2022055597
(71) Applicant: Mitsubishi Chemical Corporation, Tokyo 100-8251 (JP)
(72) Inventor: NINOMIYA, Naoya, Tokyo 100-8251 (JP); HASHIMOTO, Kei, Tokyo 100-8251 (JP); MAKI, Akira, Tokyo 100-8251 (JP); SATO, Syunsuke, Tokyo 100-8251 (JP)
(74) Representative: Vossius & Partner Patentanwälte Rechtsanwälte mbB
(86) International application number: PCT/JP2023/012740
(87) International publication number: WO 2023/190646

(57) **Abstract**

In a partitioning member that is accommodated in a battery assembly to partition single cells and in which a liquid is sealed, an opening position of the partitioning member that opens upon receiving heat generated from the single cells is defined at a specific spot at a peripheral edge portion or a surface of the partitioning member. A partitioning member 1 includes a sealing portion 32 formed by sealing edge portions of multilayer sheets 31, 31 each including a resin layer and a metal layer in a band-like manner, a liquid and a heat insulation material 2 are sealed in an internal space surrounded by the sealing portion 32, and a weak seal strength portion 4A protruding from a side facing the internal space to an edge portion side of the sealing portion 32 is provided in the sealing portion 32.

## Description

### Technical Field

The present invention relates to a partitioning member provided in a battery assembly to partition single cells, and a battery assembly in which the partitioning member is accommodated.

### Background Art

In recent years, use of a secondary battery as a power source of a vehicle or the like has been rapidly increasing, for the purpose of improving a degree of freedom when the secondary battery is mounted in a limited space in the vehicle or the like and for the purpose of increasing a cruising distance per charge, studies for increasing an energy density of the secondary battery have been conducted. Meanwhile, safety of the secondary battery tends to be inversely related to the energy density, and the safety tends to decrease as the secondary battery has a higher energy density. For example, in a secondary battery mounted on an electric vehicle whose cruising distance reaches several hundred km, a surface area temperature of the battery in a case where the secondary battery is damaged due to overcharge, an internal short circuit, or the like may exceed several hundred °C and may reach near 1000°C.

Since a secondary battery used for a power source of a vehicle or the like is generally used as a battery assembly including a plurality of single cells, when one of the single cells constituting the battery assembly is damaged and reaches the above-described temperature range, heat generated therefrom may damage adjacent single cells, and the damage may spread to the entire battery assembly in a chain reaction. In order to prevent such a chain of damage between the single cells, various techniques have been proposed in which a partitioning member is provided between a single cell and another single cell to cool a damaged single cell.

For example, there is a module in which a partitioning member having a configuration in which a coolant such as water is put in a sheet-like bag is provided between a single cell and another single cell (for example, see PTL 1). According to this module, heat generated from an adjacent single cell can be efficiently transferred to a nearby single cell, and when the adjacent single cell is damaged and a battery surface reaches a high temperature, the water in the bag can be discharged from an opening portion to cool the damaged battery.

In addition, there is a partitioning member having a configuration in which a porous body impregnated with a coolant such as water is put in a sheet-like bag (for example, see PTL 2).

### Citation List

### Patent Literature

PTL 1: JP 5352681 B
PTL 2: JP 2013-131428 A

### Summary of Invention

### Technical Problem

Upon receiving heat generated due to damage to the single cell, the partitioning member in the related art described above allows the coolant inside the sheet-like bag to evaporate and thus increase an internal pressure to cause the bag to rupture and open in spots at a peripheral edge portion or a surface of the bag to allow the coolant to flow out, but an opening position of the bag, that is, a position where the bag ruptures in spots is not predetermined, and thus it is not possible to open at a desired position and allow the coolant to flow out therefrom. In PTL 1, one side of the rectangular partitioning member serves as the opening portion, but it is not designed to allow a desired point of the opening portion to open.

The coolant flowing out from an opened portion of the partitioning member adheres to a surface of a neighboring single cell to cool the single cell, but when the coolant sprays out in the vicinity of an electrode of the single cell, a short circuit may occur when a temperature decreases and the coolant condenses.

In order to improve efficiency of cooling the single cell, it is desirable that an outflow position of the coolant can be controlled to a specific position around the partitioning member.

An object of the present invention is to enable, in a partitioning member that is accommodated in a battery assembly to partition single cells and in which a liquid is sealed, an opening position of the partitioning member that opens upon receiving heat generated from the single cells to be controlled to a specific spot at a peripheral edge portion or a surface of the partitioning member.

### Solution to Problem

As a result of diligent studies to solve the above-described problems, the present inventors have found that, when heat generated from a single cell is received, strain energy is concentrated at a part of an internal space in which a liquid is sealed in a partitioning member, in other words, an opening point is defined by causing the strain energy to concentrate at a spot such that a pressure exceeds a certain level, and thus the present invention has been conceived.

That is, the present invention includes the following aspects.
[1] A partitioning member having a thickness direction and a surface direction orthogonal to the thickness direction, and for partitioning battery members in the thickness direction, the partitioning member including:
   a sealing portion formed by sealing edge portions of a multilayer sheet including a resin layer and a metal layer in a band-like manner, in which
   a liquid is sealed in an internal space surrounded by the sealing portion, and
   a weak seal strength portion extending from a side facing the internal space to an edge portion side of the multilayer sheet is disposed in the sealing portion.
[2] The partitioning member according to [1], in which the sealing portion is formed along an entire perimeter.
[3] The partitioning member according to [1] or [2], in which a plurality of the weak seal strength portions are disposed adjacent to each other in the sealing portion.
[4] The partitioning member according to any of [1] to [3], in which the partitioning member has a polygonal shape in a plan view, and the weak seal strength portion is provided on one side of an outer periphery of the polygonal shape.
[5] The partitioning member according to any of [1] to [4], in which the sealing portion is formed with a hole in the surface direction from the weak seal strength portion to allow the sealed liquid to flow out when an internal pressure of the partitioning member increases and reaches a certain level or higher.
[6] The partitioning member according to any of [1] to [5], in which a ratio of a length of the weak seal strength portion disposed in the sealing portion to a length of the sealing portion is larger than 0 and less than 0.2.
[7] The partitioning member according to any of [1] to [6], in which the weak seal strength portion includes a non-sealing protrusion.
[8] The partitioning member according to any of [1] to [7], in which the partitioning member has an opening temperature of lower than 98°C.
[9] The partitioning member according to any of [1] to [8], in which the partitioning member has a thermal conductivity of 0.30 [W/(m K)] or less after opening.
[10] The partitioning member according to any of [1] to [9], in which a temperature difference between the opening temperature of the partitioning member and a volatilization temperature of the sealed liquid is 40°C or less.
[11] The partitioning member according to [7], in which strain energy of the non-sealing protrusion is 1.2 × 10⁻⁶ J or more when an internal gauge pressure of the internal space in which the liquid is sealed is 0.1 MPa.
[12] A battery assembly having a configuration in which the partitioning member according to any of [1] to [11] is in contact with a single cell.
[13] The battery assembly according to [12], in which at least two single cells are in contact with one partitioning member.
[14] The battery assembly according to [12] or [13], in which an interval from a center of gravity of the partitioning member to an opening position where the hole is opened is substantially constant when the partitioning member is viewed in the thickness direction.
[15] A battery pack including a battery assembly and an exhaust duct which are accommodated in a housing, in which the battery assembly includes the partitioning member according to any of [1] to [11] and a single cell, and when the internal pressure of the partitioning member increases and reaches a certain level or higher upon receiving heat generated from the single cell, the partitioning member opens to a surface where the duct is provided.
   The present invention also includes the following aspects.
[16] A partitioning member accommodated in a battery assembly to partition single cells, the partitioning member including:
   a sealing portion formed by sealing edge portions of a multilayer sheet including a resin layer and a metal layer in a band-like manner, in which
   a liquid is sealed in an internal space surrounded by the sealing portion, and
   a non-sealing protrusion protruding from a side facing the internal space to an edge portion side of the multilayer sheet is provided in the sealing portion.
[17] The partitioning member according to [16], in which strain energy of the non-sealing protrusion is 1.2 × 10⁻⁶ J or more when an internal gauge pressure of the internal space in which the liquid is sealed is 0.1 MPa.
[18] The partitioning member according to [16] or [17], in which the partitioning member includes a sealing portion formed by sealing peripheral edge portions of two planar rectangular laminated sheets facing each other in a band-like manner, and a liquid is sealed in an internal space surrounded by the sealing portion, and
   a non-sealing protrusion is provided at the sealing portion that seals any one side edge of four side edges of each of the two multilayer sheets.
[19] The partitioning member according to any of [1] to [11] and [16] to [18], in which a porous body is sealed together with a liquid having a boiling point of 80°C or higher and 250°C or lower.
[20] The partitioning member according to any of [16] to [19], in which a ratio (L/W) of a protrusion length (L) of the non-sealing protrusion provided in the sealing portion to a width (W) of the sealing portion is 0.1 to 0.9.
[21] The partitioning member according to any of [16] to [20], in which a non-sealing protrusion having a triangular shape whose apex is located on the edge portion side of the multilayer sheet is provided in the sealing portion.
[22] The partitioning member according to [21], in which an angle θ of the apex of the non-sealing protrusion located in the sealing portion is 10° to 120°.
[23] The partitioning member according to [21] or [22], in which a plurality of non-sealing protrusions are disposed adjacent to each other in the sealing portion.
[24] The partitioning member according to [23], in which the number of the plurality of non-sealing protrusions disposed adjacent to each other is 2 to 7.
[25] The partitioning member according to any of [16] to [20], in which a trapezoidal non-sealing protrusion is provided in the sealing portion.
[26] The partitioning member according to [25], in which an angle θ of an intersection obtained by extending both oblique sides of the trapezoidal non-sealing protrusion is 10° to 120°.
[27] The partitioning member according to any of [16] to [20], in which a semicircular non-sealing protrusion is provided in the sealing portion.
[28] The partitioning member according to [27], in which a plurality of the non-sealing protrusions are disposed adjacent to each other in the sealing portion.
[29] The partitioning member according to [28], in which the number of the plurality of non-sealing protrusions disposed adjacent to each other is 2 to 7.
[30] The partitioning member according to any of [16] to [20], in which a curved non-sealing protrusion is provided in the sealing portion, the non-sealing protrusion having a periphery outlined by an arc of a circle centered on a straight line parallel to a line segment in the width (W) direction of the sealing portion. (However, a case where the ratio (L/W) of the protrusion length (L) of the non-sealing protrusion provided in the sealing portion to the width (W) of the sealing portion is 0.5 is excluded.)
[31] The partitioning member according to [30], in which a curve of the periphery of the non-sealing protrusion is formed by the arc of the circle centered on the straight line parallel to the line segment in the width (W) direction of the sealing portion, and a ratio of a radius of the circle defining the arc to the width (W) of the sealing portion is 0.1 to 25.
[32] The partitioning member according to any of [16] to [20], in which a rectangular non-sealing protrusion is provided in the sealing portion.
[33] The partitioning member according to [32], in which a ratio of the protrusion length (L) of the rectangular non-sealing protrusion to a cut depth (D) in a vertical direction is 0.1 to 2.0.
[34] The partitioning member according to any of [16] to [20], in which a non-sealing protrusion having a sawtooth shape is provided in the sealing portion.
[35] A battery assembly in which the partitioning member according to any of [16] to [34] is disposed between single cells.
[36] A battery assembly in which an interval from a center of gravity of the partitioning member to an opening position where a hole is opened is substantially constant when the partitioning member is viewed in the thickness direction.
[37] A battery pack including a battery assembly and an exhaust duct which are accommodated in a housing, in which the battery assembly includes the partitioning member and a single cell, and when an internal pressure of the partitioning member increases and reaches a certain level or higher upon receiving heat generated from the single cell, the partitioning member opens to a surface where the duct is provided.
[38] A method using the partitioning member according to any of [1] to [11] and [16] to [34].

According to such configurations, since the partitioning member is provided with the weak seal strength portion or the non-sealing protrusion in the sealing portion of the multilayer sheet constituting the partitioning member, when the internal pressure of the partitioning member increases upon receiving heat generated from the single cell, strain energy is concentrated and applied to the weak seal strength portion or the non-sealing protrusion, and when the internal pressure reaches a certain level or higher, an edge portion of the multilayer sheet close to the weak seal strength portion or the non-sealing protrusion, or a surface portion of the multilayer sheet in contact with the weak seal strength portion or the non-sealing protrusion is ruptured and opened, and the liquid sealed in the partitioning member can flow out therefrom.

Since the opening position of the partitioning member can be controlled to a desired position, an outflow direction of the sealed liquid can be defined, a short circuit of the single cell can be less likely to occur, and efficiency of cooling the single cell can be improved.

As a form condition of the non-sealing protrusion that enables concentration of strain energy on a part of a peripheral edge portion of the partitioning member upon receiving heat generated from the single cell, it is preferable that strain energy of a portion of the sealing portion where the non-sealing protrusion is provided is 1.2 × 10⁻⁶ J or more when the internal gauge pressure of the internal space of the partitioning member in which the liquid is sealed is 0.1 MPa.

In the partitioning member including the non-sealing protrusion of such a form, a hole that establishes communication between the internal space and an external space of the partitioning member is formed from the portion where the non-sealing protrusion is provided, and the liquid can flow out through the hole when the pressure of the internal space in which the liquid is sealed increases upon receiving heat generated from the single cell.

As a form of the non-sealing protrusion that satisfies the condition described above, the ratio (L/W) of the protrusion length (L) of the non-sealing protrusion provided in the sealing portion to the width (W) of the sealing portion is preferably set to 0.1 to 0.9.

When the ratio of the protrusion length (L) of the non-sealing protrusion to the width (W) of the sealing portion is within the range described above, the strain energy can be effectively concentrated at the portion where the non-sealing protrusion is provided when the internal pressure of the partitioning member increases, which can lead to opening of the partitioning member.

The shape of the non-sealing protrusion provided in the sealing portion can be set to an appropriate shape having a portion protruding toward the edge portion side of the multilayer sheet, such as a triangular shape whose apex is disposed on the edge portion side of the multilayer sheet, a trapezoidal shape, a semicircular shape, a curved shape outlined by a part of an arc, a rectangular shape, or a sawtooth shape.

A plurality of non-sealing protrusions having the above-described shape may be disposed adjacent to each other in the sealing portion.

There may be a configuration in which the partitioning member includes the sealing portion formed by sealing peripheral edge portions of two planar rectangular laminated sheets facing each other in a band-like manner, the liquid is sealed in the internal space surrounded by the sealing portion, and the non-sealing protrusion is provided at the sealing portion that seals any one side edge of four side edges of each of the two multilayer sheets.

In this case, an opening point formed at the partitioning member upon receiving heat generated from the single cell is defined at a forming position of the non-sealing protrusion provided at the sealing portion on one side edge of the partitioning member. A plurality of non-sealing protrusions may be provided in the sealing portion on the one side edge, and opening may occur at a forming position of each non-sealing protrusion on the side edge or at a forming position of any one of the non-sealing protrusions. Alternatively, one or a plurality of non-sealing protrusions may be provided at each sealing portion that seals a plurality of side edges among the four side edges of the partitioning member, and an opening point of the partitioning member may be defined to control the outflow direction of the liquid sealed in the partitioning member.

The partitioning member may have a structure in which a porous body is sealed together with a liquid having a boiling point of 80°C or higher and 250°C or lower.

The battery assembly of the present invention can accommodate the partitioning member having the above-described configuration between a plurality of single cells arranged in parallel.

### Advantageous Effects of Invention

According to the partitioning member of the present invention, it is possible to control an opening position of the partitioning member, which opens upon receiving heat generated from a single cell, to a specific spot at a peripheral edge portion or a surface of the partitioning member, a short circuit can be less likely to occur in the single cell, and efficiency of cooling the single cell can be improved.

### Brief Description of Drawings

Fig. 1 shows a structure of an example of a partitioning member of the present invention, in which (A) is a schematic cross-sectional view and (B) is a cut-end view along B-B.
Fig. 2 is an enlarged view of an upper side portion of the partitioning member in Fig. 1.
Fig. 3 shows another form of a weak seal strength portion.
Fig. 4 shows a combination of the weak seal strength portion and a non-sealing protrusion.
Fig. 5 shows a structure of an example of the partitioning member of the present invention, in which (A) is a schematic cross-sectional view and (B) is a cut-end view along a B-B line.
Fig. 6 is an enlarged view of an upper side portion of the partitioning member in Fig. 5.
Fig. 7 is an enlarged view of a portion where a non-sealing protrusion in Fig. 6 is formed.
Fig. 8 includes (A), which is an enlarged view of an upper side portion of a partitioning member provided with a non-sealing protrusion having another shape, and (B), which is an enlarged view of a portion where the non-sealing protrusion is formed.
Fig. 9 also includes (A), which is an enlarged view of an upper side portion of a partitioning member provided with a non-sealing protrusion having another shape, and (B), which is an enlarged view of a portion where the non-sealing protrusion is formed.
Fig. 10 also includes (A), which is an enlarged view of an upper side portion of a partitioning member provided with a non-sealing protrusion having another shape, and (B), which is an enlarged view of a portion where the non-sealing protrusion is formed.
Fig. 11 also includes (A), which is an enlarged view of an upper side portion of a partitioning member provided with a non-sealing protrusion having another shape, and (B), which is an enlarged view of a portion where the non-sealing protrusion is formed.
Fig. 12 also includes (A), which is an enlarged view of an upper side portion of a partitioning member provided with a non-sealing protrusion having another shape, and (B), which is an enlarged view of a portion where the non-sealing protrusion is formed.
Fig. 13 also includes (A), which is an enlarged view of an upper side portion of a partitioning member provided with a non-sealing protrusion having another shape, and (B), which is an enlarged view of a portion where the non-sealing protrusion is formed.
Fig. 14 also includes (A), which is an enlarged view of an upper side portion of a partitioning member provided with a non-sealing protrusion having another shape, and (B), which is an enlarged view of a portion where the non-sealing protrusion is formed.
Fig. 15 shows a configuration of an example of a battery assembly of the present invention.
Fig. 16 includes a top view (A) and a front view (B) of a single cell used in the battery assembly.
Fig. 17 is an enlarged view of an upper side portion of a partitioning member produced in a comparative example.
Fig. 18 is also an enlarged view of an upper edge portion of another partitioning member produced in a comparative example.
Fig. 19 shows an opening position of a partitioning member of an example.
Fig. 20A is a table showing simulation results of Example 4.
Fig. 20B is also a table showing simulation results.
Fig. 21 is a table showing simulation results of Example 5.
Fig. 22 is a table showing simulation results of Example 6.
Fig. 23 is a table showing simulation results of Example 7.
Fig. 24 is a table showing simulation results of Example 8.
Fig. 25A is a table showing simulation results of Example 9.
Fig. 25B is also a table showing simulation results.
Fig. 25C is also a table showing simulation results.
Fig. 25D is also a table showing simulation results.
Fig. 26A is a table showing simulation results of Example 10.
Fig. 26B is also a table showing simulation results.
Fig. 26C is also a table showing simulation results.

### Description of Embodiments

Hereinafter, preferred embodiments of a partitioning member and a battery assembly of the present invention will be described. However, the embodiments described below are examples for embodying the technical idea of the present invention, and the present invention is not limited to the embodiments described below.

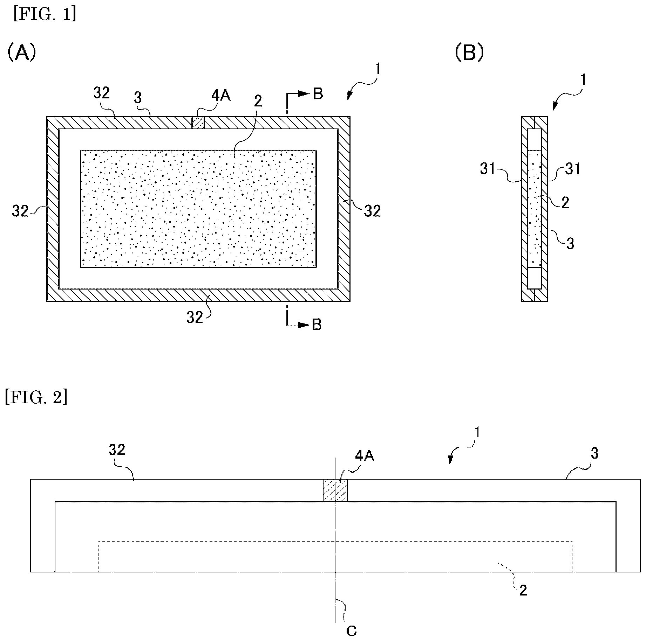

Fig. 1 shows a partitioning member of an embodiment of the present invention.

A shown partitioning member 1 is implemented by sealing a heat insulation material 2 that can hold a liquid into a casing 3 together with the liquid.

Specifically, the partitioning member 1 is formed in a substantial plate-like shape having a thickness direction and a surface direction orthogonal to the thickness direction, and is disposed between a battery member and another battery member to partition both battery members in the thickness direction. The casing 3 includes a sealing portion 32 formed by sealing edge portions of multilayer sheets 31, 31 each including a resin layer and a metal layer in a band-like manner, the heat insulation material 2 and the liquid are sealed in an internal space surrounded by the sealing portion 32, and a weak seal strength portion 4A extending from a side facing the internal space to an edge portion side of the multilayer sheets is disposed in the sealing portion 32 that seals an upper side edge, that is, one of four peripheral side edges of the casing 3.

### <Partitioning Member>

As shown in Fig. 1, the partitioning member 1 is formed in a flat plate-like shape or a sheet-like shape having an appropriate thickness. The partitioning member 1 is used to partition, in the thickness direction, between single cells constituting the battery assembly or between a single cell constituting the battery assembly and a member other than the single cell, for example, a single cell and a wall surface of a housing that accommodates the partitioning member.

### [Heat Insulation Material]

The heat insulation material can hold the liquid, and usually has elasticity.

The elastic heat insulation material contracts or deforms in the thickness direction due to expansion of the single cell. In the example shown in Fig. 1, the heat insulation material 2 is formed in a flat plate-like shape or a sheet-like shape having a horizontally long rectangular shape. The heat insulation material 2 is accommodated together with the liquid in the rectangular flat plate-like or sheet-like casing 3 larger than the heat insulation material 2, and is sealed in the interior surrounded by the sealing portion 32 of the casing 3.

The heat insulation material preferably contains a powdered inorganic material and a fibrous inorganic material. In the present invention, the "fibrous inorganic material" means an inorganic material having a shape whose long diameter is 100 times or more a short diameter, and the "powdered inorganic material" means an inorganic material having a shape whose long diameter is shorter than 100 times a short diameter. In particular, in the case of being fibrous, the "long diameter" means a fiber length, and the "short diameter" means a diameter of a cross-section orthogonal to the long diameter direction.

The fibrous inorganic material is preferably at least one selected from the group consisting of paper, a cotton sheet, a polyimide fiber, an aramid fiber, a polytetrafluoroethylene (PTFE) fiber, a glass fiber, rock wool, a ceramic fiber, and a bio-soluble inorganic fiber, and among these, at least one selected from the group consisting of a glass fiber, rock wool, a ceramic fiber, and a bio-soluble inorganic fiber is particularly preferable. A ceramic fiber is a fiber mainly containing silica and alumina (silica: alumina = 40:60 to 0:100), and specifically, a silica-alumina fiber, a mullite fiber, and an alumina fiber can be used.

The powdered inorganic material is preferably at least one selected from the group consisting of a silica particle, an alumina particle, a calcium silicate, a clay mineral, vermiculite, mica, cement, pearlite, fumed silica, and aerogel, and among these, at least one selected from the group consisting of a silica particle, an alumina particle, a calcium silicate, and vermiculite is particularly preferable. Among calcium silicates, xonotlite, tobermorite, wollastonite, and gyrolite are preferable, and gyrolite is particularly preferable. Gyrolite having a petal-like structure maintains a porous structure even when compressed and deformed, and thus has excellent liquid retention performance. Clay minerals mainly include magnesium silicate (including talc and sepiolite), montmorillonite, and kaolinite.

The heat insulation material containing the fibrous inorganic material and the powdered inorganic material can be selected from known materials. For example, the heat insulation material can be selected from those disclosed in JP 2003-202099 A.

A density of the heat insulation material is preferably 0.20 g/cm³ to 1.10 g/cm³ from the viewpoint of having a low weight and excellent heat insulating performance even under a high temperature. When the density of the heat insulation material is equal to or larger than the lower limit value, there are more air layers in an internal void, which is preferable from the viewpoint of heat insulating performance and liquid retention performance, and meanwhile, when the density is equal to or smaller than the upper limit value, the density is preferable from the viewpoint of having smaller deformation when compressed. From these viewpoints, the density of the heat insulation material is preferably 0.35 g/cm³ or more, more preferably 0.55 g/cm³ or more, and meanwhile, is preferably 1.05 g/cm³ or less, more preferably 1.00 g/cm³ or less.

### [Liquid]

The liquid held by the heat insulation material accommodated in the internal space of the casing may be any liquid as long as the liquid is thermally conductive and can efficiently transfer heat generated from the single cell to an adjacent single cell. The liquid preferably has a boiling point of 80°C or higher and 250°C or lower at a normal pressure (1 atm), and more preferably has a boiling point of 100°C or higher and 150°C or lower at a normal pressure. As the liquid, water is particularly preferable from the viewpoint of having high vaporization heat and being generally available.

The liquid preferably contains at least one selected from the group consisting of water, alcohols, esters, ethers, ketones, hydrocarbons, fluorine-based compounds, and silicone-based oils. These may be used alone or a mixture of two or more thereof may be used.

Examples of alcohols that can be used as the liquid include alcohols containing 3 to 8 carbon atoms such as propanol, isopropanol, butanol, benzyl alcohol, and phenylethyl alcohol, and divalent or higher alcohols such as alkylene glycols like ethylene glycol and propylene glycol. These may be used alone or a mixture of two or more thereof may be used.

Examples of esters that can be used as the liquid include alkyl aliphatic carboxylic acid esters, alkyl carbonate diesters, alkyl oxalate diesters, and fatty acid esters of ethylene glycol. Examples of alkyl aliphatic carboxylic acid esters include lower alkyl formate esters such as methyl formate, n-butyl formate, and isobutyl formate, and lower alkyl aliphatic carboxylic acid esters such as lower alkyl acetate esters such as n-propyl acetate, isopropyl acetate, n-butyl acetate, and isobutyl acetate, and lower alkyl propionate esters such as ethyl propionate, n-propyl propionate, isopropyl propionate, n-butyl propionate, and isobutyl propionate. Examples of alkyl carbonate diesters include lower alkyl carbonate diesters such as dimethyl carbonate, diethyl carbonate, dibutyl carbonate, and methyl ethyl carbonate. Examples of alkyl oxalate diesters include lower alkyl oxalate diesters such as dimethyl oxalate and diethyl oxalate. An example of a fatty acid ester of ethylene glycol is ethylene glycol acetate ester. These may be used alone or a mixture of two or more thereof may be used.

Examples of ethers that can be used as the liquid include n-butyl ether, n-propyl ether, and isoamyl ether. These may be used alone or a mixture of two or more thereof may be used.

Examples of ketones that can be used as the liquid include ethyl methyl ketone and diethyl ketone. These may be used alone or a mixture of two or more thereof may be used.

Examples of hydrocarbons that can be used as the liquid include heptane, octane, nonane, decane, toluene, and xylene. These may be used alone or a mixture of two or more thereof may be used.

Examples of fluorine-based compounds that can be used as the liquid include refrigerants 1,1,2,2,3,3,4-heptafluorocyclopentane(HFC-c447ef) and 1,1,1,2,2,3,3,4,4,5,5,6,6-tridecafluorooctane(HFC-76-13sf). These may be used alone or a mixture of two or more thereof may be used.

Examples of silicone-based oils that can be used as the liquid include modified silicone oils such as methyl polysiloxane, methylphenyl polysiloxane, cyclic methyl siloxane, and silicone polyether copolymers. These may be used alone or a mixture of two or more thereof may be used.

The liquid may contain an antifreeze agent, a preservative, and a pH adjuster. These may be used alone or a mixture of two or more thereof may be used. The liquid may contain an additive such as a substance that imparts antifreeze properties (antifreeze agent), a preservative, or a pH adjuster. What is contained in the liquid is not limited thereto, and may be added as necessary.

### [Casing]

As shown in Fig. 1, the casing 3 accommodates the heat insulation material 2 that holds the liquid in the sealed internal space surrounded by the sealing portion 32 formed by sealing peripheral edge portions of two laminated sheets 31, 31, which face each other and each have a planar rectangular shape, in a band-like manner.

The casing has flexibility and is deformable according to expansion of the single cell. The casing can return to an original state when the single cell contracts. As the casing, for example, a resin sheet or a resin film can be applied. For example, the heat insulation material is interposed between two opposingly positioned resin sheets or resin films or a resin sheet or resin film folded in half, and a peripheral edge portion of the casing where the two resin sheets or resin films are in contact is sealed by a sealing method such as fusion or thermal bonding, thereby sealing the heat insulation material impregnated with the liquid.

As the casing, for example, a resin casing or a metal casing can be used. A laminate of a metal foil and a resin is preferable due to high heat resistance and strength thereof. The laminate of a metal and a resin is preferably a laminate or a multilayer sheet of three or more layers including a protective resin layer, a metal layer, and a sealant resin layer.

Examples of the metal used as the metal foil and the metal layer include aluminum, copper, tin, nickel, stainless steel, lead, a tin-lead alloy, bronze, silver, iridium, and phosphor bronze. In particular, aluminum, copper, and nickel are preferable, and aluminum is more preferable.

The protective resin layer is not particularly limited, and examples thereof include polyolefin resins such as homopolymers and copolymers of ethylene, propylene, and butene, amorphous polyolefin resins such as cyclic polyolefins, polyester resins such as polyethylene terephthalate (PET) and polyethylene naphthalate (PEN), polyamide resins such as nylon 6, nylon 66, nylon 12, and copolymerized nylon, partially hydrolyzed ethylene-vinyl acetate copolymers (EVOH), polyimide resins, polyetherimide resins, polysulfone resins, polyethersulfone resins, polyetherketone resins, polycarbonate resins, polyvinyl butyral resins, polyarylate resins, fluororesins, acrylic resins, and biodegradable resins. Among these, polyamide resins such as nylon 6 and polyester resins such as polyethylene terephthalate are preferable from the viewpoint of imparting heat resistance and mechanical strength as the casing. The protective resin layer may be a single layer, or two or more layers may be laminated. In the case of two or more layers, the layers may be selected from different resin layers or the same resin layer.

At least one of a thermosetting resin and a thermoplastic resin can be used for the sealant resin layer, and a thermoplastic resin is particularly preferable. Examples of the sealant resin layer include polyolefin resins such as homopolymers and copolymers of ethylene, propylene, and butene, amorphous polyolefin resins such as cyclic polyolefins, polyester resins such as polyethylene terephthalate (PET) and polyethylene naphthalate (PEN), polyvinyl butyral resins, acrylic resins, and biodegradable resins. Among these, at least one selected from the group consisting of polyolefin resins such as high-pressure low-density polyethylene (LDPE), linear low-density polyethylene (LLPDE), and polypropylene resin is preferable from the viewpoint of melting properties at a low temperature for obtaining a function of releasing the liquid inside the casing to the outside during abnormal heat generation. Further, from the viewpoint of long-term storage stability within a temperature range usually used as the partitioning member in the battery assembly and from the viewpoint of versatility, a polypropylene resin is more preferable, and a non-stretched polypropylene resin is particularly preferable.

A thickness of the protective resin layer is not particularly limited, and is preferably 5 pm or more, more preferably 10 pm or more, and still more preferably 15 pm or more from the viewpoint of imparting mechanical strength. In order to ensure flexibility, the thickness is preferably 100 pm or less, more preferably 50 pm or less, and still more preferably 30 pm or less.

A thickness of the metal layer is not particularly limited, and is preferably 5 pm or more, more preferably 8 µm or more, and still more preferably 12 pm or more from the viewpoint of ensuring moisture permeability and preventing generation of pinholes, and is preferably 50 pm or less, more preferably 35 pm or less, and still more preferably 20 pm or less from the viewpoint of ensuring flexibility.

A thickness of the sealant resin layer is not particularly limited, and is preferably 10 pm or more, more preferably 20 pm or more, and still more preferably 30 pm or more from the viewpoint of ensuring sealing properties. In order to ensure flexibility, the thickness is preferably 120 pm or less, more preferably 100 pm or less, and still more preferably 80 pm or less.

A thickness of the casing is not particularly limited, and is preferably 30 pm or more, more preferably 45 pm or more, and still more preferably 65 pm or more from the viewpoint of mechanical strength in consideration of the thickness of each of the above-described layers. In order to ensure flexibility, the thickness is preferably 280 pm or less, more preferably 210 pm or less, and still more preferably 150 pm or less.

The casing seals the liquid and the heat insulation material in the casing by joining peripheral edge portions of two casings in an annular manner by a sealing method such as fusion or thermal bonding. Alternatively, the liquid and the heat insulation material may be sealed by folding one casing and joining peripheral edge portions by the above-described sealing method. The casing is preferably flexible, that is, elastic, but may not be flexible.

An internal air pressure of the casing is preferably lower than an external air pressure from the viewpoint of sufficiently increasing a temperature at the time of hole formation. Therefore, it is particularly preferable to perform vacuum sealing when sealing the casing. It is also possible to control the temperature at the time of hole formation by adjusting the internal air pressure.

### [Weak Seal Strength Portion]

The weak seal strength portion 4A is provided at a desired position where an opening portion is to be provided. For example, as shown in Figs. 1 and 2, it is also possible to provide the weak seal strength portion 4A at a center (see reference numeral C in Fig. 2) of an upper side edge that is one longitudinal side edge of the casing 3 having a horizontally long rectangular shape within the sealing portion 32 that seals the upper side edge. The weak seal strength portion 4A is a portion where sealing is released at the sealing portion 32 when an internal pressure of the casing 3 increases to a predetermined level or higher upon receiving heat generated from the single cell and where a hole that establishes communication between the inside and the outside of the casing 3 is formed to allow the internal space of the casing 3 to communicate with the outside.

Here, the "weak seal strength portion" means a portion where seal strength is relatively low as compared to seal strength of the sealing portion.

The weak seal strength portion preferably has seal strength of 0% to 95%, more preferably 0% to 90%, more preferably 0% to 80%, more preferably 0% to 60%, more preferably 0% to 40%, and more preferably 0% to 20% with respect to that of the sealing portion from the viewpoint of easily specifying an opening position.

The seal strength is measured from a maximum load (N/15mm) when a tensile load is applied until a sealed portion breaks, using a tensile tester (product name: AG1000, manufactured by Shimadzu Corporation) under conditions of a measurement environment of 23°C and 50% RH, and a testing speed of 50 mm/min.

A "non-sealing protrusion" to be described later corresponds to a portion having seal strength of 0% with respect to the sealing portion.

A "length of the sealing portion" means a length of an entire perimeter of the sealing portion in a direction perpendicular to a "width (W) of the sealing portion".

A "length of one side of the sealing portion" means a length of one side of the sealing portion in the direction perpendicular to the "width (W) of the sealing portion" when the partitioning member is polygonal.

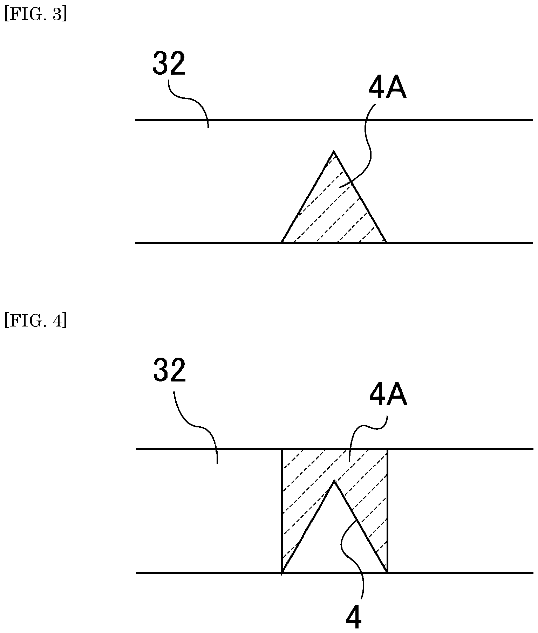

A "length of the weak seal strength portion" means a length of a boundary line between the weak seal strength portion and the internal space when viewed in the thickness direction, that is, when the partitioning member is viewed in a plan view. The boundary line corresponds to, for example, a base of a quadrangular shape at the weak seal strength portion shown in Fig. 2. The weak seal strength portion shown in Fig. 3 corresponds to a base of a triangular shape.

From the viewpoint of facilitating opening of the partitioning member, the length of the weak seal strength portion is preferably larger than 0 and less than 20, more preferably larger than 0 and less than 15, more preferably larger than 0 and less than 10, more preferably larger than 0 and less than 5, and still more preferably larger than 0 and less than 2, when the length of the sealing portion is 100.

From the viewpoint of easily specifying the partitioning member, the length of the weak seal strength portion is preferably larger than 0 and less than 20, more preferably larger than 0 and less than 15, more preferably larger than 0 and less than 10, more preferably larger than 0 and less than 5, and still more preferably larger than 0 and less than 2, when the length of one side of the sealing portion is 100.

In order to adjust the length of the weak seal strength portion, it is preferable to dispose a plurality of weak seal strength portions adjacent to each other.

Here, for example, as shown in Fig. 2, the weak seal strength portion 4A may be provided within a region of the sealing portion having a length of 30 mm as a whole over 15 mm on each of left and right sides of a center C of the sealing portion 32.

From the viewpoint of easily opening the partitioning member, an area ratio of the weak seal strength portion to an area of the sealing portion having a length of 30 mm including the entire boundary line is preferably more than 0 and less than 0.50, more preferably more than 0 and less than 0.40, more preferably more than 0 and less than 0.30, more preferably more than 0 and less than 0.20, and more preferably more than 0 and less than 0.10.

As shown in Fig. 2, when the length of the weak seal strength portion is a straight line, an area of a region that is surrounded by a lower side edge of the sealing portion of 30 mm including the boundary line, perpendicular lines at both end points of the lower side edge of the sealing portion of 30 mm, and an upper side edge of the sealing portion and that includes the weak seal strength portion is referred to as the "area of the sealing portion".

When the length of the weak seal strength portion includes a curved line, an area of a region that is surrounded by the lower side edge of the sealing portion of 30 mm including the boundary line, normal lines of tangent lines at both end points of the lower side edge of the sealing portion of 30 mm, and the upper side edge of the sealing portion and that includes the weak seal strength portion is referred to as the "area of the sealing portion".

For example, instead of the rectangular shape shown in Fig. 2, the weak seal strength portion is provided in the sealing portion in a triangular shape with an upper portion thereof being an apex, and when a region having a 30 mm length of the sealing portion is exceeded, such as when a base (corresponding to the boundary line) of the triangular shape is 40 mm, in other words, when not all of the weak seal strength portion is contained in the region, that is, when a plurality of "sealing portions having a length of 30 mm including all of the boundary line" can be taken, the area of the weak seal strength portion that can be contained is determined to be minimized.

The partitioning member of the present invention is opened under abnormal circumstances, and the sealed liquid volatilizes, whereby a thermal conductivity can be reduced.

An opening temperature of the partitioning member is preferably lower than 98°C, and preferably 95°C or lower, from the viewpoint of opening in an initial stage leading to the abnormal circumstances. From the viewpoint of preventing malfunction, the temperature is preferably 60°C or higher, more preferably 70°C or higher, and still more preferably 80°C or higher.

A temperature difference between the opening temperature of the partitioning member and a volatilization temperature of the sealed liquid is preferably higher than 0°C and 40°C or lower. From the viewpoint of quickly switching thermal conductivity of the partitioning member, the temperature is more preferably higher than 0°C and 35°C or lower, and more preferably higher than 0°C and 30°C or lower.

Here, the "opening temperature" means a surface temperature of the partitioning member when the partitioning member is opened. The "volatilization temperature" means the surface temperature of the partitioning member when 90% by volume or more of the sealed liquid volatilizes.

When the partitioning member is opened, it is preferable that a hole is formed in the surface direction from the weak seal strength portion to allow the sealed liquid to flow out.

The thermal conductivity of the partitioning member is preferably less than 0.30 [W/(m ·K)], preferably less than 0.20 [W/(m ·K)], more preferably less than 0.15 [W/(m ·K)], and still more preferably less than 0.10 [W/(m ·K)] for heat insulation under abnormal circumstances.

As shown in Fig. 2, the weak seal strength portion 4A extends from a side of the sealing portion 32 facing the internal space of the casing 3 to a side facing an external space, or may protrude in a tapering manner from the side facing the internal space of the casing 3 to the side facing the external space, as shown in Fig. 3. Alternatively, as shown in Fig. 4, the non-sealing protrusion 4 to be described later may be provided in the sealing portion 32, and the weak seal strength portion 4A may be disposed on an outer side thereof to overlap the non-sealing protrusion 4.

According to the partitioning member 1 of the present embodiment configured as described above, since the weak seal strength portion 4A is provided in the sealing portion 32 that seals a periphery of the casing 3, when an internal pressure of the partitioning member 1 increases upon receiving heat generated from the single cell, strain energy is concentrated and applied to a portion where the weak seal strength portion 4A is provided, and when the internal pressure reaches a certain level or higher, the laminated sheets 31, 31 sealed along the weak seal strength portion 4A are peeled off to form a hole that establishes communication between the inside and the outside of the casing 3, which is opened to allow the liquid sealed in the partitioning member 1 to flow out. By allowing the liquid to flow out, thermal resistance of the heat insulation material 2 sealed in the partitioning member 1 is switched to exhibit high thermal resistance, thereby cooling the single cell which is in contact with the partitioning member 1 and where an abnormal temperature increase occurs, and simultaneously restricting heat conduction to an adjacent single cell.

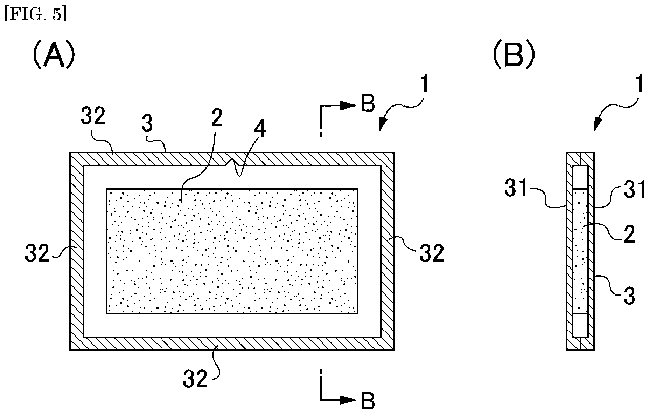

Fig. 5 shows a partitioning member of another embodiment of the present invention.

Similarly to the embodiment described above, the shown partitioning member 1 is implemented by sealing the heat insulation material 2 that can hold the liquid into the casing 3 together with the liquid.

Specifically, as in the embodiment described above, in the partitioning member 1, the casing 3 includes the sealing portion 32 formed by sealing the edge portions of the multilayer sheets 31, 31 each including the resin layer and the metal layer in a band-like manner, the heat insulation material 2 and the liquid are sealed in the internal space surrounded by the sealing portion 32, and the non-sealing protrusion 4 protruding from the side facing the internal space to an outer edge portion side of the sealing portion 32 is provided in the sealing portion 32 that seals an upper side edge, that is, one of four peripheral side edges of the casing 3.

### [Non-Sealing Protrusion]

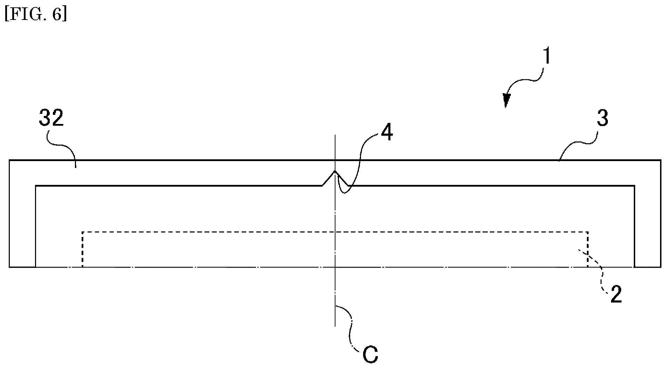

The non-sealing protrusion 4 is provided at a desired position where an opening portion is to be provided. For example, as shown in Figs. 5 and 6, it is also possible to provide the non-sealing protrusion 4 at a center (see reference numeral C in Fig. 6) of the upper side edge that is one longitudinal side edge of the casing 3 having a horizontally long rectangular shape within the sealing portion 32 that seals the upper side edge. The non-sealing protrusion 4 is a portion where a hole is formed in the sealing portion 32 to establish communication between the internal space of the casing 3 and the outside when the internal pressure of the casing 3 increases to a predetermined level or higher upon receiving heat generated from the single cell. The non-sealing protrusion 4 has a configuration in which a portion where the multilayer sheets 31, 31 are not sealed is disposed in the sealing portion 32 in a protruding manner from the side facing the internal space of the casing 3 toward the outer edge portion side of the sealing portion 32.

An example of a configuration of the non-sealing protrusion in which a hole is formed in the sealing portion 32 when the internal pressure of the casing 3 increases to a predetermined level or higher is a configuration in which strain energy of a portion where the non-sealing protrusion 4 is provided at the sealing portion 32 is 1.2 × 10⁻⁶ J or more when an internal gauge pressure of the internal space in which the liquid is sealed in the casing 3 is 0.1 MPa.

A lower limit of the strain energy is preferably 2.0 × 10⁻⁶ J or more, and more preferably 2.6 × 10⁻⁶ J or more. An upper limit of the strain energy is preferably 2.5 × 10⁻⁵ J or less, and more preferably 1.9 × 10⁻⁵ J or less. In the above-described range, effects of the present invention tend to be more effectively obtained.

The strain energy is calculated based on a shape of the partitioning member, and tensile stiffness and a density of a layer having maximum tensile stiffness of the casing, using structural analysis software (product name: Ansys Mechanical, manufactured by Ansys).

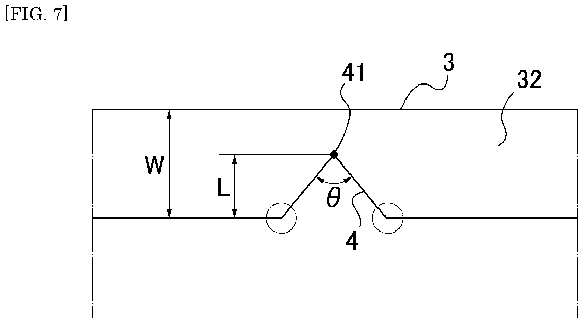

The non-sealing protrusion 4 preferably has a shape in which large strain energy is applied to a boundary portion between an edge portion of the sealing portion 32 on the side facing the internal space of the casing 3 and a portion where the non-sealing protrusion 4 is formed, which is circled in Fig. 7, when the internal pressure of the casing 3 increases. For example, as shown in Figs. 5 to 8, the non-sealing protrusion 4 can be formed in a triangular shape whose apex is located on a peripheral edge portion side of the multilayer sheets 31, 31, that is, an edge portion side of the sealing portion 32.

In order for the non-sealing protrusion 4 to effectively concentrate the strain energy on the portion where the non-sealing protrusion 4 is provided when the internal pressure of the casing 3 increases, as shown in Fig. 7, it is preferable that a ratio (L/W) of a protrusion length (L) from the side of the non-sealing protrusion 4 facing the internal space of the partitioning member 1 to a tip end 41 located in the sealing portion 32 to a width (W) of the sealing portion 32 is set to 0.1 to 0.9. The ratio is more preferably 0.2 to 0.8, and particularly preferably 0.3 to 0.7. When the ratio is set in such a range, the increased strain energy is applied, a tip end portion of the non-sealing protrusion 4 in a protruding direction expands toward an edge side of the sealing portion 32 to increase an area of a non-sealed portion, and a hole can be formed in the sealing portion 32 to cause opening. Alternatively, a portion where a thickness of the multilayer sheets 31, 31 is locally reduced may be generated at the non-sealing protrusion 4, strain energy can be effectively concentrated on the portion, and as a result, the partitioning member 1 can be caused to open.

When the non-sealing protrusion 4 is formed in a triangular shape, an angle θ of the apex located in the sealing portion 32 can be set in a range of 10° to 120°. The angle is more preferably 20° to 110°, and particularly preferably 30° to 100°. In the above-described range, the effects of the present invention tend to be more effectively obtained.

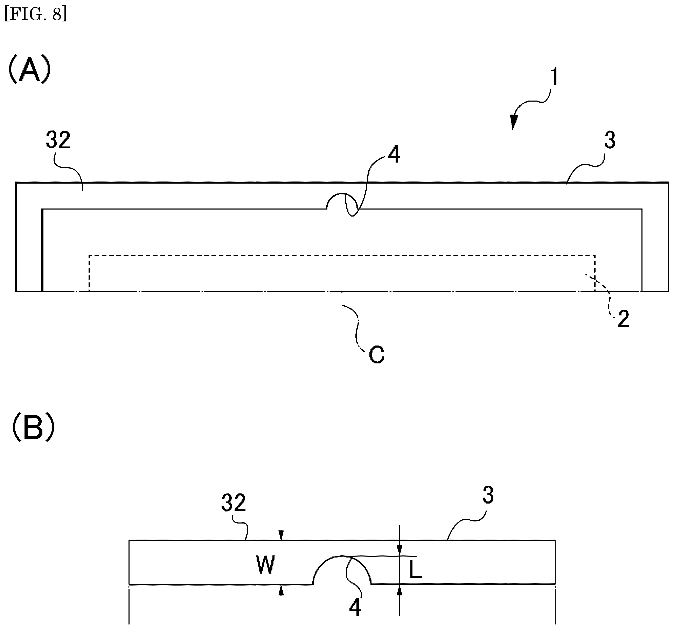

As another example of the configuration of the non-sealing protrusion 4 in which strain energy of the portion where the non-sealing protrusion 4 is provided at the sealing portion 32 is 1.2 × 10⁻⁶ J or more when the internal gauge pressure of the internal space of the casing 3 in which the liquid is sealed is 0.1 MPa, as shown in Fig. 8, there is a non-sealing protrusion 4 in which a non-sealing portion is provided in a semicircular shape in the sealing portion 32. In such a semicircular shape, a circle radius defining an outer periphery thereof corresponds to the protrusion length (L). Thus, the ratio (L/W) of the circle radius (L) to the width (W) of the sealing portion 32 is preferably set to 0.1 to 0.9. The ratio is more preferably 0.2 to 0.8, and particularly preferably 0.3 to 0.7. In the above-described range, the effects of the present invention tend to be more effectively obtained.

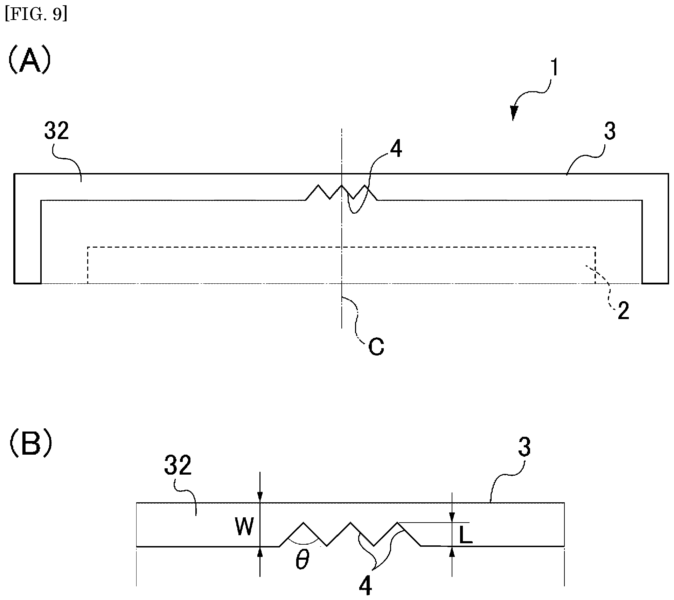

As shown in Fig. 9, there is an example of the non-sealing protrusion 4 having a shape in which a plurality of non-sealing portions of the triangular shape described above are disposed adjacent to each other.

The ratio (L/W) of the protrusion length (L) to the width (W) of the sealing portion 32 in this aspect is preferably set to 0.1 to 0.9. The ratio is more preferably 0.3 to 0.8, and particularly preferably 0.4 to 0.6. When the ratio is set in such a range, the increased strain energy is applied, the tip end portion of the non-sealing protrusion in the protruding direction expands toward the edge side of the sealing portion 32 to increase the area of the non-sealed portion, and the hole can be formed in the sealing portion 32 to cause opening.

When the non-sealing protrusion is formed in the triangular shape, the angle θ of the apex located in the sealing portion 32 can be set in a range of 10° to 120°. The angle is more preferably 20° to 110°, and particularly preferably 30° to 100°. In the above-described range, the effects of the present invention tend to be more effectively obtained.

The number of the triangular non-sealing protrusions disposed adjacent to each other is preferably 2 to 7, and more preferably 2 to 5. In the above-described range, the effects of the present invention tend to be more effectively obtained.

In the above-described aspect, when the ratio (L/W) of the protrusion length (L) to the width (W) of the sealing portion 32 is 0.5 and the angle θ of the apex located in the sealing portion 32 is 90°, the number of non-sealing protrusions is preferably 2 to 5.

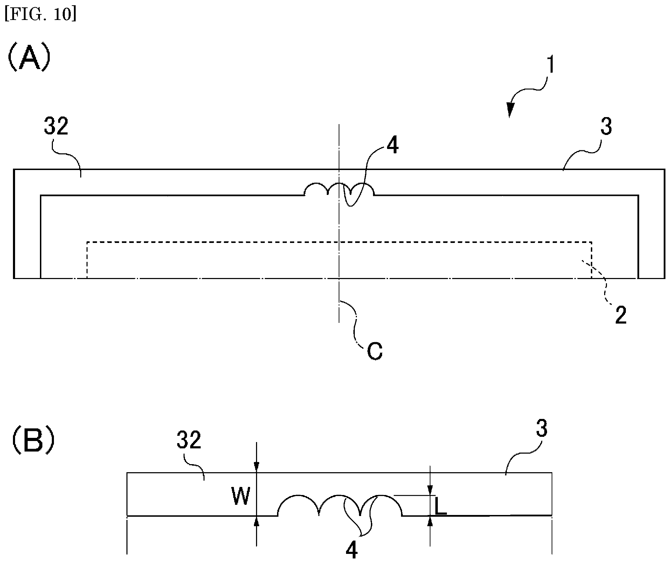

As shown in Fig. 10, there is an example of the non-sealing protrusion 4 in which a plurality of non-sealing portions of the semicircular shape described above are disposed adjacent to each other.

As described above, in this aspect, the radius of the circle defining the outer periphery corresponds to the protrusion length (L). Thus, the ratio (L/W) of the circle radius (L) to the width (W) of the sealing portion 32 is preferably set to 0.1 to 0.9. The ratio is more preferably 0.2 to 0.8, and particularly preferably 0.3 to 0.7. When the ratio is set in such a range, the effects of the present invention tend to be more effectively obtained.

The number of the semicircular non-sealing protrusions is preferably 2 to 7, and more preferably 2 to 5. In the above-described range, the effects of the present invention tend to be more effectively obtained.

In the above-described aspect, when the ratio (L/W) of the circle radius (L) to the width (W) of the sealing portion 32 is 0.5, the number of non-sealing protrusions is preferably 2 to 5.

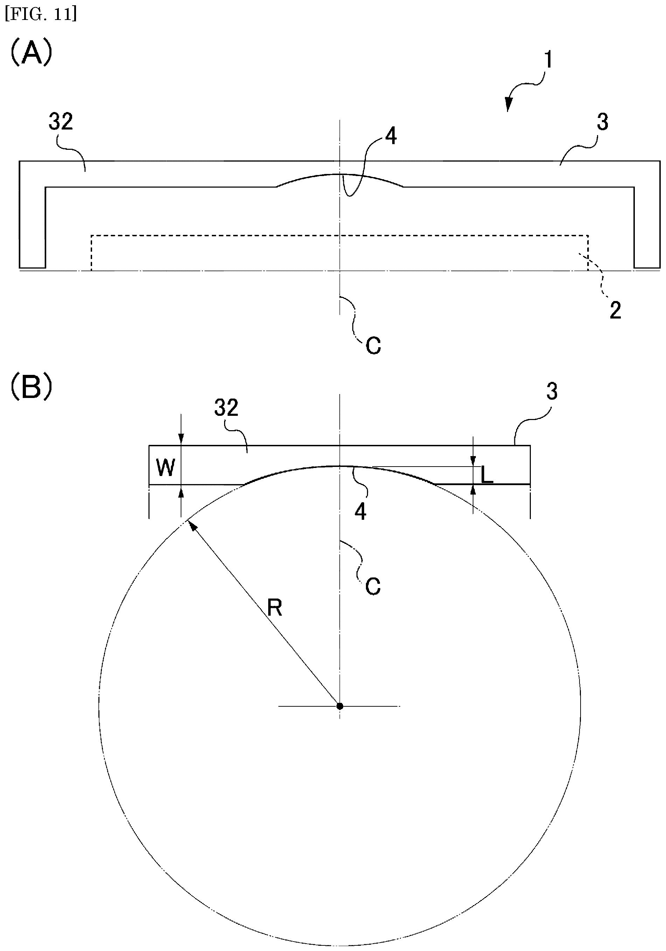

Further, as shown in Fig. 11, there is an example of the non-sealing protrusion 4 in which the non-sealing portion is provided in a curved shape.

As shown in Fig. 11, the curved shape in this aspect is formed by an arc of a circle having a radius R and being centered on a straight line parallel to a line segment in a width direction of the sealing portion 32. In this case, the case of the semicircular shape is excluded. That is, the aspect of the semicircular shape shown in Fig. 4 is not included in the case of the curved non-sealing protrusion herein.

In the curved shape, the ratio (L/W) of a maximum value of a width of the non-sealing portion of the sealing portion 32, that is, the protrusion length (L), to the width (W) of the sealing portion 32 is preferably set to 0.1 to 0.9 (excluding 0.5). The ratio is more preferably 0.3 to 0.7 (excluding 0.5), and particularly preferably 0.4 to 0.6 (excluding 0.5). In the above-described range, the effects of the present invention tend to be more effectively obtained.

The ratio of the radius (R) of the circle defining the curved arc to the width (W) of the sealing portion is preferably 0.5 to 20. The ratio is more preferably 0.6 to 20, particularly preferably 0.7 to 15, and still more preferably 0.8 to 10. In the above-described range, the effects of the present invention tend to be more effectively obtained.

When the ratio (L/W) of the maximum value of the width of the non-sealing portion of the sealing portion 32, that is, the protrusion length (L) to the width (W) of the sealing portion 32 is 0.5, the ratio of the radius (R) of the circle forming the curved arc to the width (W) of the sealing portion 32 is preferably 0.3 to 20. The ratio is more preferably 0.4 to 15, particularly preferably 0.6 to 10, and yet still more preferably 0.7 to 8. In the above-described range, the effects of the present invention tend to be more effectively obtained.

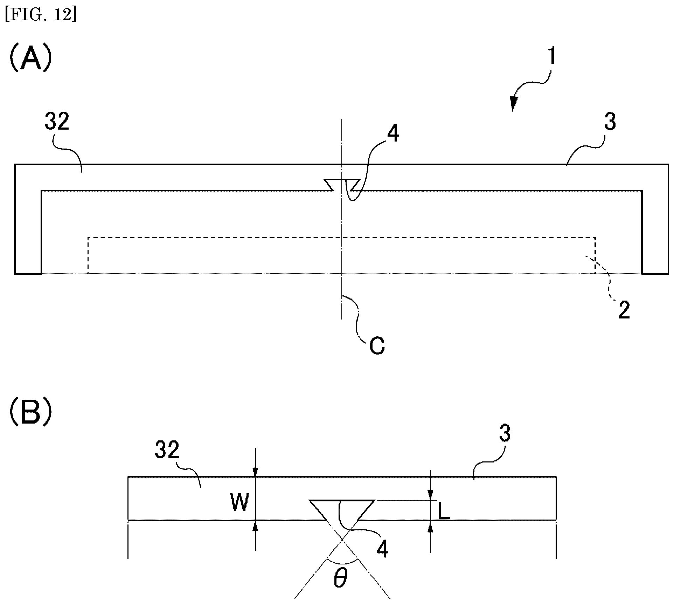

As shown in Fig. 12, there is an example of the non-sealing protrusion 4 in which the non-sealing portion is provided in a trapezoidal shape.

In this aspect, a length of the non-sealing protrusion 4 from the side facing the internal space of the partitioning member 1 to a base of the trapezoidal shape corresponds to the protrusion length (L). Thus, the ratio (L/W) of the protrusion length (L) to the width (W) of the sealing portion 32 is preferably set to 0.1 to 0.9. The ratio is more preferably 0.2 to 0.8, and particularly preferably 0.3 to 0.7. In the above-described range, the effects of the present invention tend to be more effectively obtained.

When the non-sealing protrusion 4 is formed in the trapezoidal shape, the angle θ of an intersection obtained by extending both oblique sides thereof may be set in a range of 10° to 120°. The angle is more preferably 20° to 110°, and particularly preferably 30° to 100°. In the above-described range, the effects of the present invention tend to be more effectively obtained.

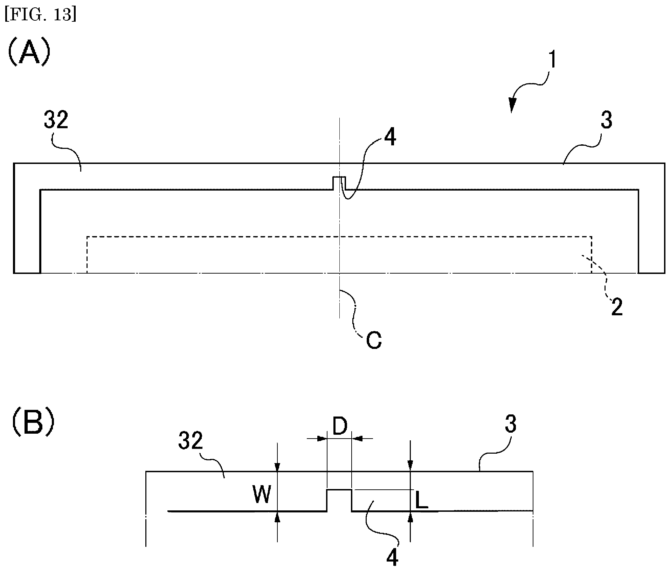

As shown in Fig. 13, there is an example of the non-sealing protrusion 4 in which the non-sealing portion is provided in a rectangular shape.

In this aspect, a maximum value of a width of the non-sealing portion of the sealing portion 32 from the side of the non-sealing protrusion 4 facing the internal space of the partitioning member 1 corresponds to the protrusion length (L). Thus, the ratio (L/W) of the protrusion length (L) to the width (W) of the sealing portion 32 is preferably set to 0.1 to 0.9. The ratio is more preferably 0.2 to 0.8, and particularly preferably 0.3 to 0.7. In the above-described range, the effects of the present invention tend to be more effectively obtained.

When the non-sealing protrusion 4 is formed in a rectangular shape, it is preferable that a ratio of the protrusion length (L) to a vertical cut length (D) is set to 0.1 to 2.0. The ratio is more preferably 0.2 to 1.9, and particularly preferably 0.3 to 1.8. In the above-described range, the effects of the present invention tend to be more effectively obtained.

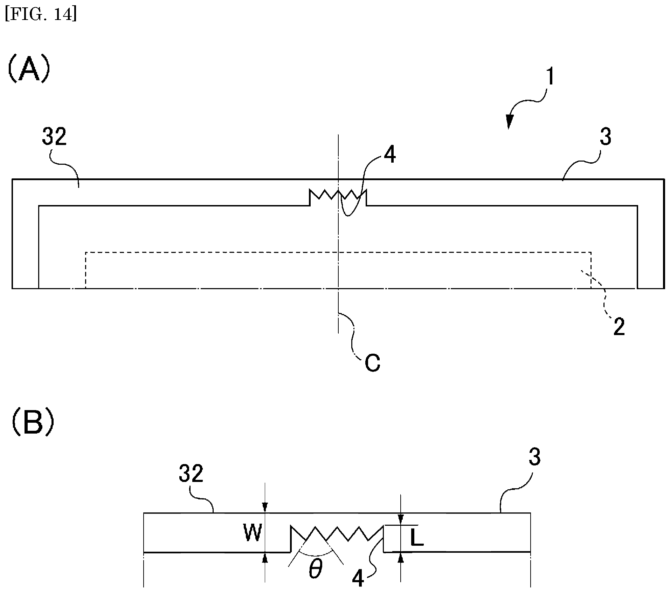

As shown in Fig. 14, there is an example of the non-sealing protrusion 4 in which the non-sealing portion is provided in a sawtooth shape.

In this aspect, a length of the non-sealing protrusion 4 from the side facing the internal space of the partitioning member 1 to a tip end of the sawtooth shape located in the sealing portion 32 corresponds to the protrusion length (L). Thus, the ratio (L/W) of the protrusion length (L) to the width (W) of the sealing portion 32 is preferably set to 0.1 to 0.9. The ratio is more preferably 0.2 to 0.8, and particularly preferably 0.3 to 0.7. In the above-described range, the effects of the present invention tend to be more effectively obtained.

When the non-sealing protrusion 4 is formed in the sawtooth shape, the angle θ of an apex located in the sealing portion 32 in each triangular shape forming teeth of the saw can be set in a range of 5° to 120°. The angle is more preferably 20° to 110°, and particularly preferably 30° to 100°. In the above-described range, the effects of the present invention tend to be more effectively obtained.

The number of triangular non-sealing portions forming the teeth of the saw is preferably 2 to 7, more preferably 2 to 5. In the above-described range, the effects of the present invention tend to be more effectively obtained.

In this aspect, when the ratio (L/W) of the protrusion length (L) to the width (W) of the sealing portion 32 is 0.5, and the angle θ of the apex located in the sealing portion 32 in each triangular shape forming the teeth of the saw is 90°, the number of triangular portions forming the teeth of the saw is preferably 2 to 7, and particularly preferably 2 to 5.

In any of the non-sealing protrusions 4, the ratio (L/W) of the protrusion length (L) to the width (W) of the sealing portion 32 is preferably set to 0.1 to 0.9 as described above.

The non-sealing protrusion 4 of the partitioning member 1 shown in Figs. 5 to 7 is disposed at a center of the upper side edge of the casing 3, and alternatively, may be located at an appropriate position along the upper side edge, or the non-sealing protrusion 4 may be located at a plurality of locations on the upper side edge. Instead of the upper side edge or in addition to the upper side edge of the casing 3, one or a plurality of non-sealing protrusions 4 may each be disposed at an appropriate position on left or right side edge or a lower side edge of the casing 3.

According to the partitioning member 1 of the present embodiment configured as described above, since the non-sealing protrusion 4 is provided in the sealing portion 32 that seals the periphery of the casing 3, when the internal pressure of the partitioning member 1 increases upon receiving heat generated from the single cell, strain energy is concentrated and applied to the portion where the non-sealing protrusion 4 is provided, and when the internal pressure reaches a certain level or higher, an outer edge portion of the sealing portion 32 close to an end of the non-sealing protrusion 4 or a surface portion of the sealing portion 32 in contact with the non-sealing protrusion 4 ruptures to form a hole, which is opened to allow the liquid sealed in the partitioning member to flow out. Alternatively, a portion where the thickness of the multilayer sheet is locally reduced may be generated at the non-sealing protrusion, strain energy can be effectively concentrated on the portion, and the partitioning member can be caused to open.

By allowing the liquid to flow out, thermal resistance of the heat insulation material sealed in the partitioning member is switched to exhibit high thermal resistance, thereby cooling the single cell which is in contact with the partitioning member and where an abnormal temperature increase occurs, and simultaneously restricting heat conduction to an adjacent single cell.

Since the opening position of the partitioning member of this embodiment can be controlled to a desired position, an opening direction can be defined, a short circuit of the single cell can be less likely to occur, and efficiency of cooling the single cell can be improved.

### <Battery Assembly>

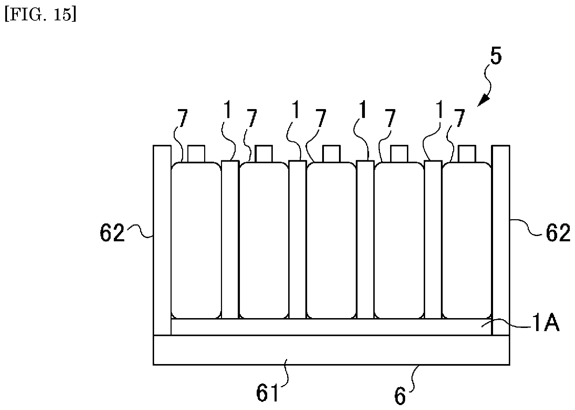

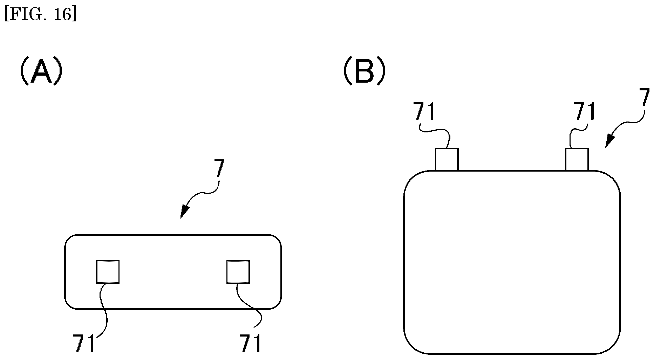

Fig. 15 shows an example of a configuration of a battery assembly in which single cells are partitioned by the partitioning member having the above-described configuration, and Fig. 16 shows an example of a configuration of each single cell constituting the battery assembly.

A single cell 7 used in the battery assembly 5 is generally a single cell called a prismatic cell or a pouch cell, which has a rectangular parallelepiped shape having an appropriate thickness, an appropriate width, and an appropriate height, and is provided with electrode terminals 71, 71 on an upper surface or a side surface thereof.

The single cell 7 is, for example, a lithium-ion secondary battery including a positive electrode and a negative electrode, which can absorb and release lithium ions, and an electrolyte. In addition to the lithium-ion secondary battery, secondary batteries such as an all-solid-state lithium-ion battery, a lithium polymer battery, a lithium metal battery, a lithium-sulfur battery, a lithium-air battery, an all-polymer battery, a sodium-sulfur battery, a nickel-metal hydride battery, a nickel-cadmium battery, and a lead-acid battery can be applied.

In the battery assembly 5, a plurality of single cells 7 are accommodated in a housing 6 that includes a bottom wall 61, four side walls 62, and a lid member. The single cells 7 are partitioned by disposing the partitioning member 1 having the above-described configuration, and the adjacent single cells 7 are partitioned in the thickness direction of the partitioning member 1. The positive and negative electrode terminals 71, 71 of the adjacent single cells 7 are electrically connected by a bus bar (not shown) in series or in parallel or in a combination of series and parallel such that the battery assembly 5 outputs predetermined electric power. As shown in Fig. 11, in the battery assembly 5, a partitioning member 1A having the same configuration as that of the partitioning member 1 may be disposed between a bottom surface of the housing 6 and each single cell 7.

A larger battery assembly can also be implemented by electrically connecting a plurality of battery assemblies in series or in parallel, or in a combination of series and parallel. In this case, in the large battery assembly, a partitioning member having the same configuration as that of the partitioning member 1 may be disposed between the battery assemblies inside.

The partitioning member of the present invention is preferably accommodated outside the single cell and inside the battery assembly. At this time, an area ratio of the partitioning member to an area of a contact surface of an adjacent single cell 7 with the partitioning member (an area of the partitioning member/an area of the contact surface of the single cell with the partitioning member) is preferably 0.5 to 1.1, more preferably 0.8 to 1.05, and particularly preferably 0.9 to 1.0. When being within such a range, there is a tendency that heat transfer between single cells is promoted at a room temperature, a temperature of a sealed portion is increased to a higher level and the sealed portion is easily ruptured when the single cells abnormally generate heat, a larger internal pressure is applied to rupture the sealed portion when the single cells abnormally generate heat, and the single cells are insulated from heat more satisfactorily when the single cells abnormally generate heat.

From the viewpoint of efficiently controlling heat transfer, it is preferable that at least two single cells are in contact with one partitioning member. Contact surfaces may be the same surface or may be different surfaces.

In order to increase the temperature of the sealed portion when the single cell abnormally generates heat and easily cause a rupture, it is desirable that a width of the sealed portion is set such that the sealed portion of the partitioning member overlaps the contact surface of the adjacent single cell with the partitioning member, and that the inside of an inner edge of the sealed portion is entirely located inside the contact surface of the adjacent single cell with the partitioning member.

From the viewpoint of specifying the opening position of the partitioning member under abnormal circumstances, an interval from a center of gravity of the partitioning member to the opening position where a hole is opened is preferably substantially constant when the battery assembly is viewed in the thickness direction. The interval is preferably 80% or more identical for any two partitioning members, more preferably 90% or more identical, and more preferably 95% or more identical.

An aspect of the present invention relates to a battery pack in which the battery assembly including the partitioning member and the single cell is accommodated in a housing.

The battery pack usually includes an exhaust duct. From the viewpoint of efficiently removing the volatilized liquid, it is preferable that the partitioning member is configured to be opened to a surface where the exhaust duct is provided.

The battery assembly is applied to, for example, a battery pack mounted in an electric vehicle (EV), a hybrid electric vehicle (HEV), a plug-in hybrid electric vehicle (PHEV), electric heavy machinery, an electric motorcycle, an electric assist bicycle, a ship, an aircraft, an electric train, an uninterruptible power supply (UPS), a home energy storage system, and a power system stabilization battery system using renewable energy such as wind power/solar power/tidal power/geothermal power. The battery assembly can also be used as a power source that supplies electric power to devices other than the above-described EV and the like.

### Examples

Next, specific embodiments of the present invention will be described in more detail with reference to Examples. The present invention is not limited to these Examples.

### (Example 1)

A casing was formed using an aluminum laminate film. The aluminum laminate film was a film having a total thickness of 112 pm including a biaxially stretched polyethylene terephthalate film having a thickness of 15 pm as a protective resin layer (outside), an aluminum layer having a thickness of 12 pm as a metal layer, a non-stretched nylon film having a thickness of 15 µ as a reinforcement layer, a high retort non-stretched polypropylene film (CPP, P1146 manufactured by TOYOBO Co., Ltd.) having a thickness of 60 pm as a sealant resin layer to be a sealing portion (inside), and a polyurethane-based adhesive layer having a thickness of 4 pm between the layers.

The aluminum laminate film was cut into a rectangular shape having a height of 105 mm and a width of 158 mm, two of the cut films were stacked to face each other, and three peripheral sides were heat-fused at a heating temperature of 165°C, a heating time of 3 seconds, and a sealing portion width of 10 mm.

Here, one side among the three sides was heat-fused in such a manner that a non-sealing protrusion having a triangular shape in which the angle θ of the apex shown in Figs. 5 to 7 was 30°C was disposed at a center of the side.

Next, a porous sheet (vermiculite sheet, height: 60 mm, width: 120 mm, thickness: 0.9 mm, density: 800 kg/m³) as a heat insulation material was accommodated from one unfused side of the casing, and 5 cc of water as a liquid was further injected therein, and then the inside of the casing was vacuum-sealed by heat-fusing the unfused side with a sealing width of 10 mm.

Then, an excessive outer peripheral surface around the casing was cut to produce a partitioning member having a height of 95 mm, a width of 148 mm, and a thickness of 1.1 mm. In the partitioning member, a width of a sealing portion sealed by a peripheral edge portion of the casing is 5 mm.

### (Example 2)

A partitioning member was produced in the same manner as in Example 1 except that the angle θ of the apex of the non-sealing protrusion was changed to 60°.

### (Example 3)

A partitioning member was produced in the same manner as in Example 1 except that the angle θ of the apex of the non-sealing protrusion was changed to 90°.

In Examples 1 to 3, an area ratio of the weak seal strength portion to an area of the sealing portion having a length of 30 mm was 0.022 to 0.091.

### (Comparative Example)

Two partitioning members were produced in the same manner as in Example 1, except that the non-sealing protrusion was not provided on one side among the three sides, and the side was fused in the same manner as the three peripheral sides.

The partitioning members prepared in Examples and Comparative Examples were subjected to the following opening evaluation. Results are shown in Table 1.

### [Opening Evaluation of Inside of Partitioning Member]

A mica sheet (height: 150 mm, width: 100 mm, thickness: 0.5 mm), a brass plate 1 (height: 150 mm, width: 100 mm, thickness: 5 mm), a partitioning member, a brass plate 2 (height: 150 mm, width: 100 mm, thickness: 5 mm), and a heat insulation plate (made of glass fiber, height: 150 mm, width: 100 mm, thickness: 10 mm) were laminated in this order on a heater, and a load was adjusted to 2 t using a hydraulic press machine from above.

Thereafter, the heater was heated from a room temperature to 200°C at a rate of 5°C/min, and temperature changes in the brass plates 1 and 2 were measured.

A temperature of the brass plate 1 when the sealing portion was opened in the heating process was recorded as an opening temperature.

A temperature difference between the opening temperature and a volatilization temperature was recorded.

**[Table 1]**

| | θ | Opening temperature (°C) | Temperature difference | Opening position |
|---|---|---|---|---|
| Example 1 | 30° | 83 | 34 | Protrusion |
| Example 2 | 60° | 93 | 29 | Protrusion |
| Example 3 | 90° | 89 | 37 | Protrusion |
| Comparative Example | No protrusion | 98 | - | See Figs. 13 and 14 |

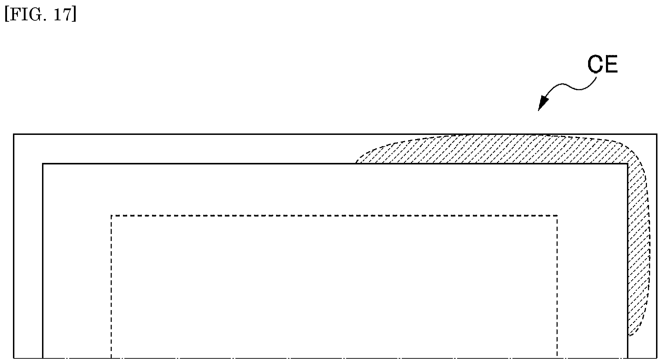

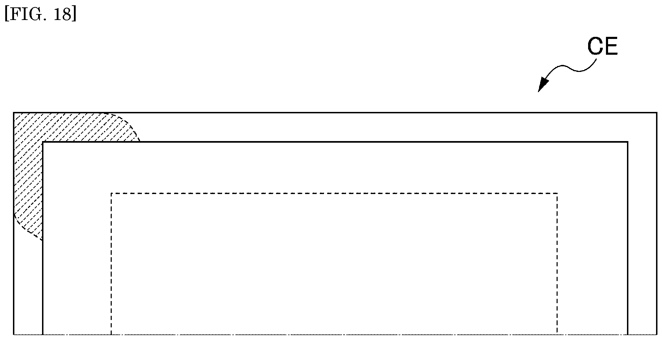

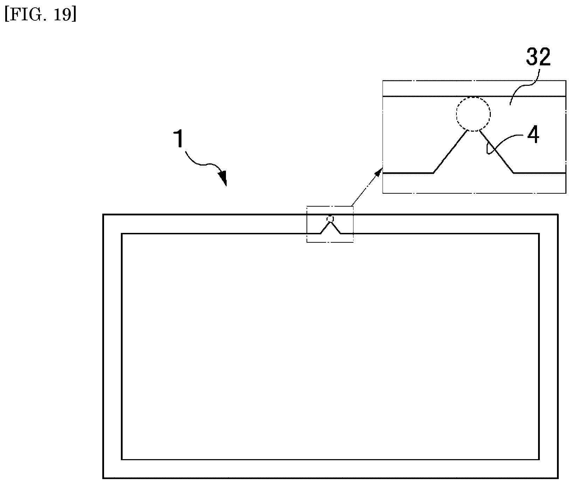

In the two partitioning members produced in Comparative Example, one partitioning member CE was opened at a position indicated by dashed hatching in Fig. 17, and the other partitioning member CE was opened in the same manner at a position indicated by dashed hatching in Fig. 18. The opening positions of the partitioning members of Comparative Example were irregular and were not determined. In contrast, in the present invention, by providing the non-sealing protrusion in the sealing portion, opening positions of Examples 1 to 3 were opened from the non-sealing protrusion as shown in Fig. 19. Accordingly, it is considered that stress is concentrated by providing the protruding non-sealing portion, and the opening position can be selectively controlled.

Hereinafter, an opening function by providing the non-sealing protrusion in the sealing portion according to the embodiment of the present invention will be described based on a computer simulation in which a formation condition of the non-sealing protrusion is calculated.

Simulation software was used to calculate maximum strain energy acting on the casing when a gauge internal pressure of 0.01 MPa was applied to the internal space and to calculate for examining a portion where the energy acted. Results are shown in Table 2.

**[Table 2]**

| | θ | Maximum strain energy [J] | Acting portion |
|---|---|---|---|
| Example 1 | 30° | 2.66 × 10⁻⁶ | Protrusion |
| Example 2 | 60° | 3.18 × 10⁻⁶ | Protrusion |
| Example 3 | 90° | 3.83 × 10⁻⁶ | Protrusion |
| Comparative Example | No protrusion | 1.13 × 10⁻⁶ | Uniform |

In Comparative Example, strain energy was substantially uniformly applied to a sealed portion, and a portion where the energy was concentrated was not found. In Examples 1 to 3, the maximum strain energy was doubled as compared with Comparative Example, and the portion where the strain energy acted was concentrated on the protrusion.

From this result, it can be said that by providing the protrusion as in the present invention, stress can concentrate strain energy on a desired location, and the opening position can be selectively set.

### (Example 4)

In the aspect of the partitioning member shown in Fig. 7, strain energy was calculated by a simulation when the ratio (L/W) of the protrusion length (L) to the width (W) of the sealing portion and the angle θ were changed.

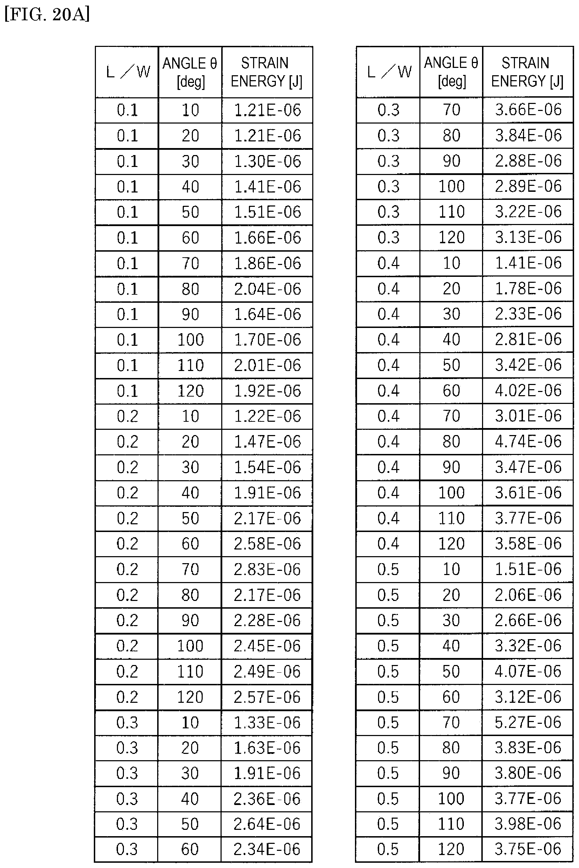

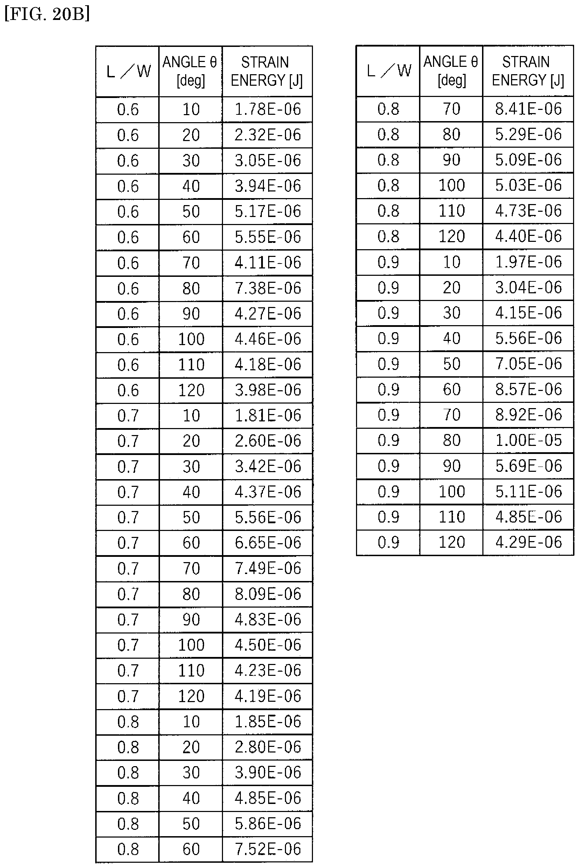

The simulation was performed based on materials and shapes of the partitioning member and the sealing portion using structural analysis software (product name: Ansys Mechanical, manufactured by Ansys). Results are shown in tables in Figs. 20A and 20B.

In the following table showing the simulation results, "E-0n (n is a number)" means "× 10⁻ⁿ".

### (Example 5)

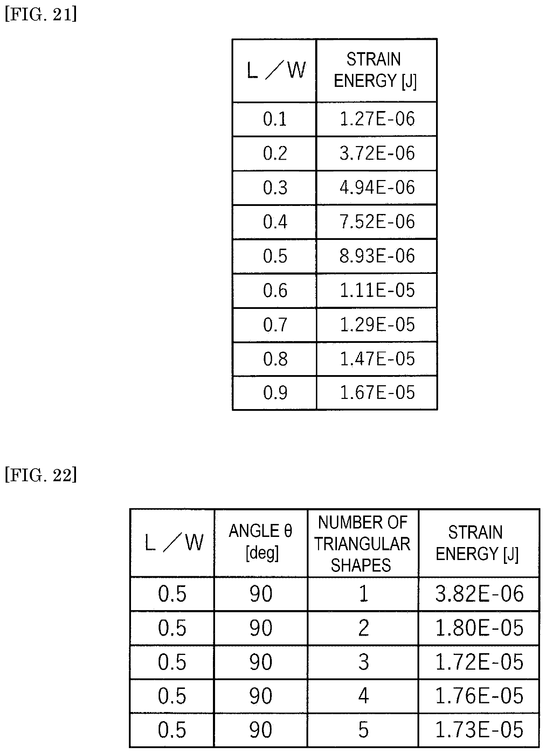

In the aspect of the partitioning member shown in Fig. 8, strain energy was calculated by a simulation when the ratio (L/W) of the protrusion length (L) to the width (W) of the sealing portion, that is, a radius of the semicircular shape was changed. Results are shown in a table in Fig. 21.

### (Example 6)

In the aspect of the partitioning member shown in Fig. 9, strain energy was calculated by a simulation when the number of non-sealing protrusions, each of which has a triangular whose apex in the sealing portion 32 has an angle θ of 90°, was changed with the same ratio (L/W) of the protrusion length (L) to the width (W) of the sealing portion. Results are shown in a table in Fig. 22.

### (Example 7)

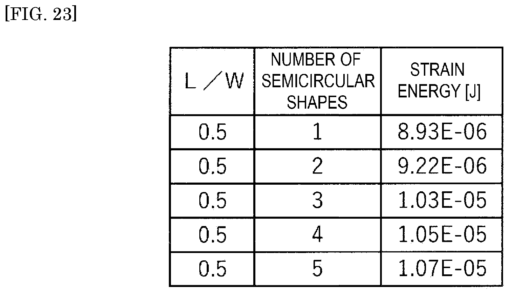

In the aspect of the partitioning member shown in Fig. 10, strain energy was calculated by a simulation when the number of semicircular non-sealing protrusions was changed with the same ratio (L/W) of the protrusion length (L) to the width (W) of the sealing portion, that is, the same radius of the semicircular shape. Results are shown in a table in Fig. 23.

### (Example 8)

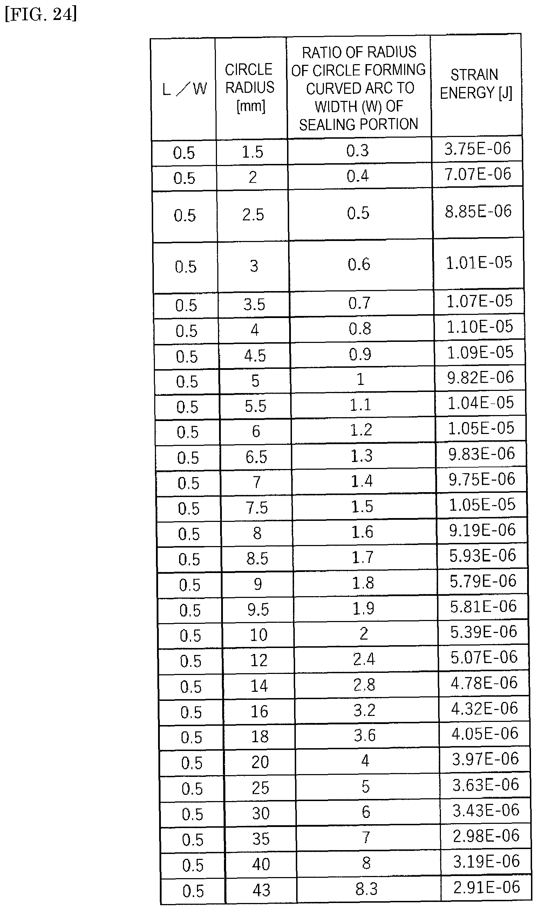

In the aspect of the partitioning member shown in Fig. 11, strain energy was calculated by a simulation when the radius (R) of the circle that forms the curved arc was changed with the same ratio (L/W) of the protrusion length (L) to the width (W) of the sealing portion. Results are shown in a table in Fig. 24.

### (Example 9)

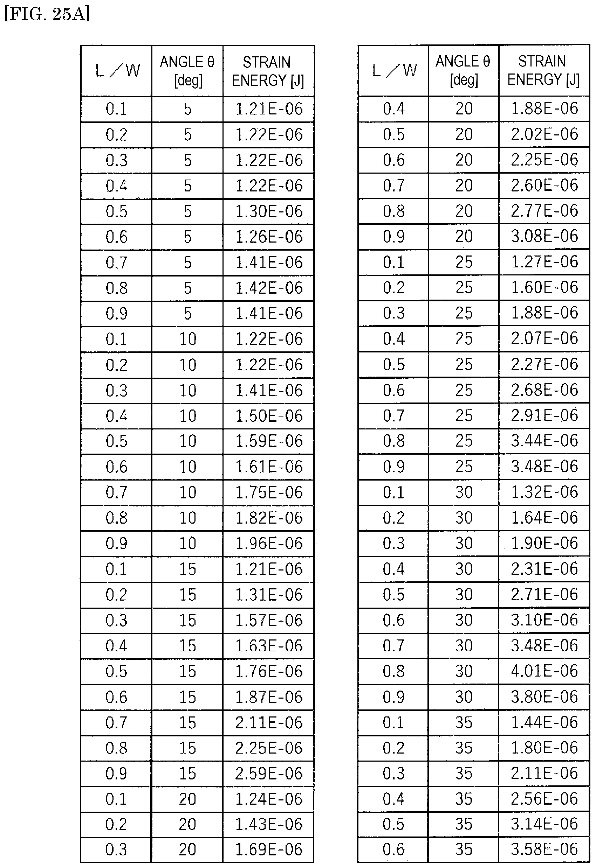

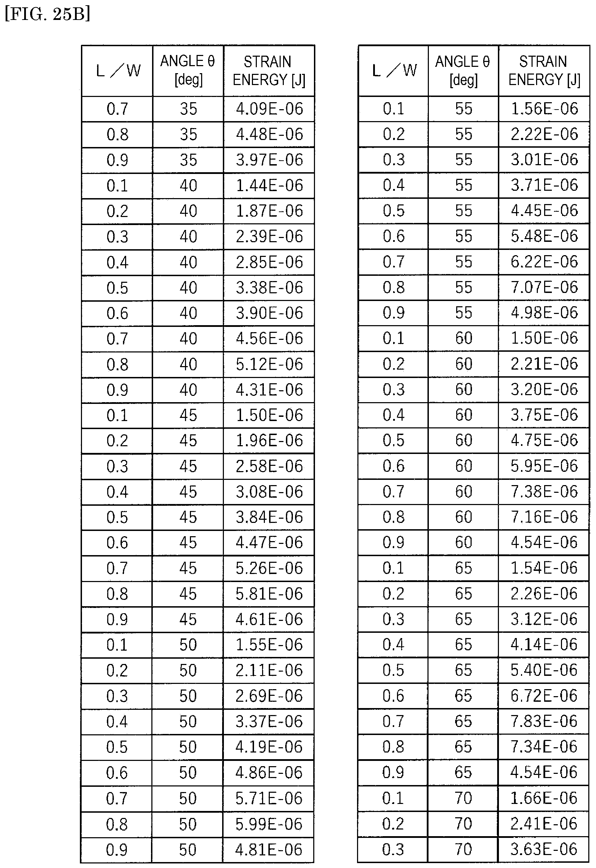

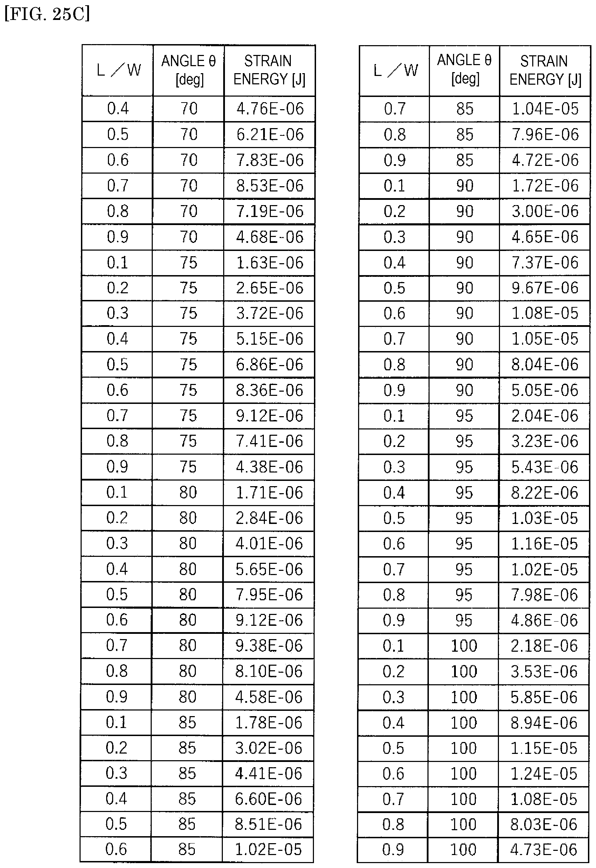

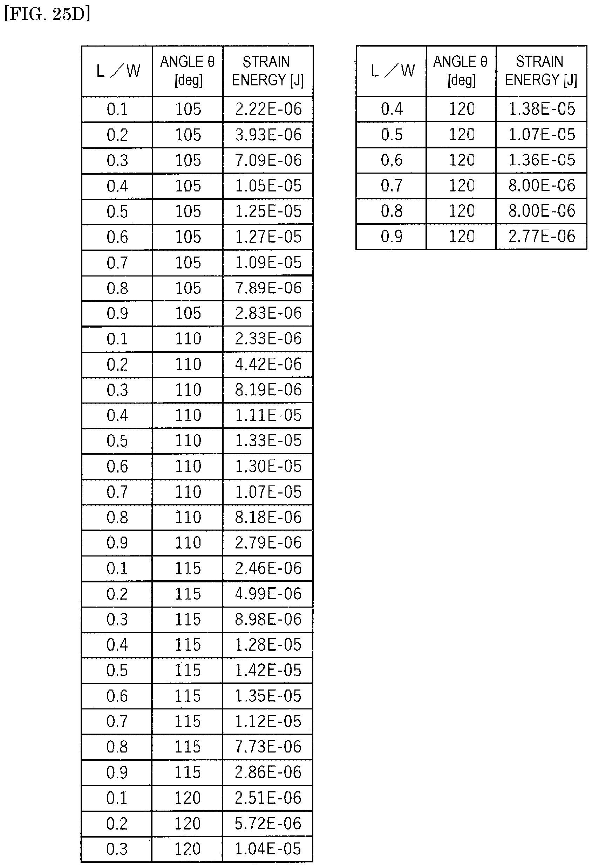

In the aspect of the partitioning member shown in Fig. 12, strain energy was calculated by a simulation when the ratio (L/W) of the protrusion length (L) to the width (W) of the sealing portion and the angle θ of the intersection obtained by extending the oblique sides of the trapezoidal shape were changed. Results are shown in tables in Figs. 25A to 25D.

### (Example 10)

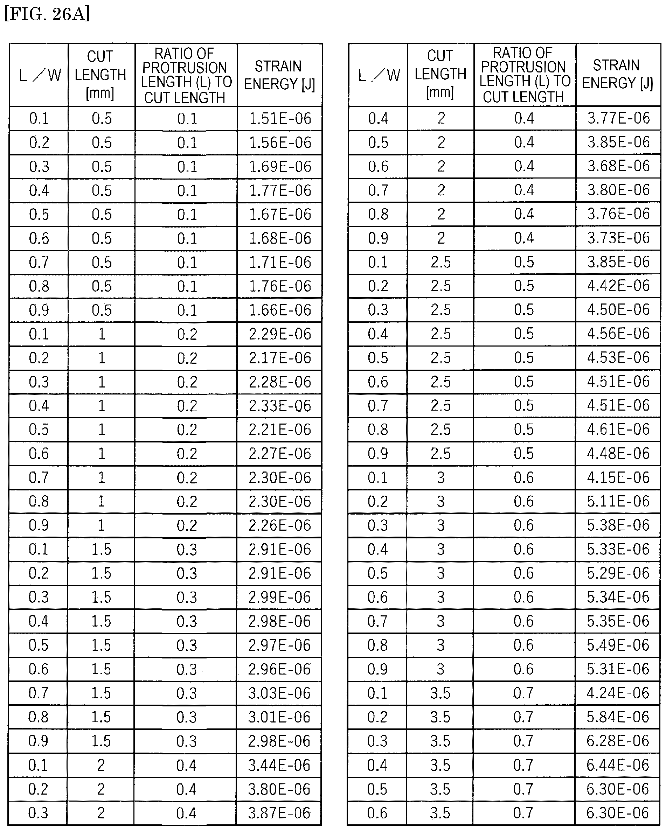

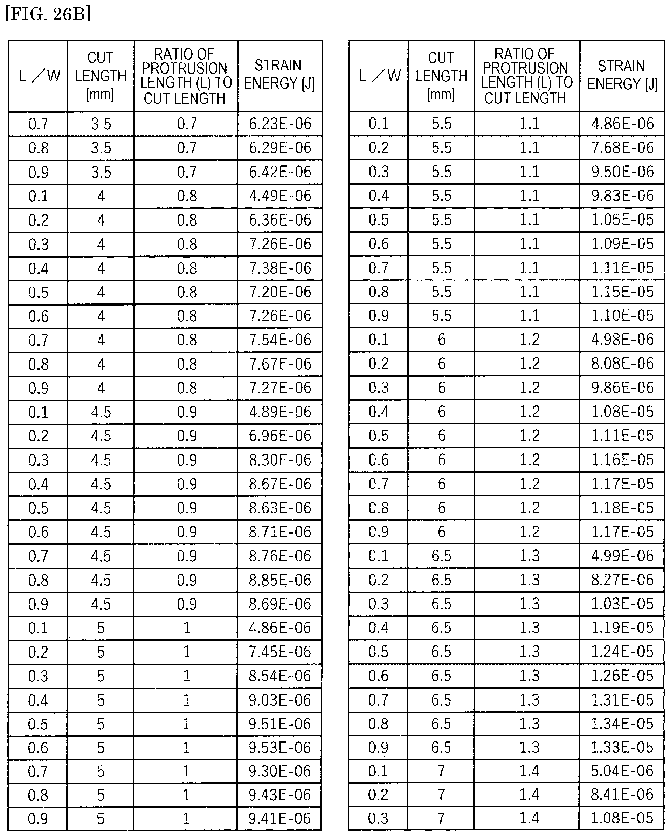

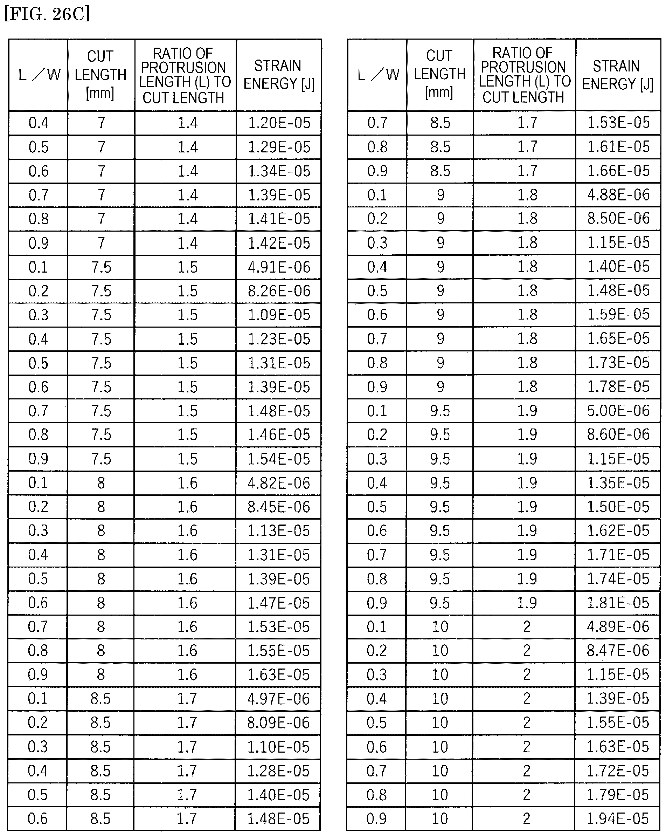

In the aspect of the partitioning member shown in Fig. 13, strain energy was calculated by a simulation when the ratio (L/W) of the protrusion length (L) to the width (W) of the sealing portion and the cut length (D) were changed. Results are shown in tables in Figs. 26A to 26C.

In each Example described above, the partitioning member is implemented by sealing the heat insulation material that can hold water in the casing together with water, and alternatively, water or another coolant instead of the heat insulation material may be sealed in the casing to implement the partitioning member. In this case, by providing the non-sealing protrusion at any position in the sealing portion around the casing, it is still possible to control an outflow direction of the coolant by defining a position where the sealing portion is ruptured and opened as the internal pressure increases due to heating to a position where the non-sealing protrusion is provided.

The configurations of the partitioning member and the battery assembly of the present invention described above are examples, and can be appropriately modified based on design requirements or the like without departing from the gist of the present invention.

In the present description, when expressed as "X to Y" (X and Y are any numbers), meaning of "X or more and Y or less" and meaning of "preferably larger than X" and "preferably smaller than Y" are included unless otherwise specified.

Further, when expressed as "X or more" (X is any number), meaning of "preferably more than X" is included unless otherwise specified, and when expressed as "Y or less" (Y is any number), meaning of "preferably less than Y" is included unless otherwise specified.

### Reference Signs List

1, 1A partitioning member
2 heat insulation material
3 casing
31 multilayer sheet
32 sealing portion
4 non-sealing protrusion
4A weak seal strength portion
5 battery assembly
6 housing
61 bottom wall portion
62 side wall portion
7 single cell
71 electrode terminal

## Claims

1. A partitioning member having a thickness direction and a surface direction orthogonal to the thickness direction, and for partitioning battery members in the thickness direction, the partitioning member comprising:
a sealing portion formed by sealing edge portions of a multilayer sheet including a resin layer and a metal layer in a band-like manner, wherein
a liquid is sealed in an internal space surrounded by the sealing portion, and
a weak seal strength portion extending from a side facing the internal space to an edge portion side of the multilayer sheet is disposed in the sealing portion.

2. The partitioning member according to claim 1, wherein
the sealing portion is formed along an entire perimeter.

3. The partitioning member according to claim 1 or 2, wherein
a plurality of the weak seal strength portions are disposed adjacent to each other in the sealing portion.

4. The partitioning member according to any one of claims 1 to 3, wherein
the partitioning member has a polygonal shape in a plan view, and the weak seal strength portion is provided on one side of an outer periphery of the polygonal shape.

5. The partitioning member according to any one of claims 1 to 4, wherein
the sealing portion is formed with a hole in the surface direction from the weak seal strength portion to allow the sealed liquid to flow out when an internal pressure of the partitioning member increases and reaches a certain level or higher.

6. The partitioning member according to any one of claims 1 to 5, wherein
a ratio of a length of the weak seal strength portion disposed in the sealing portion to a length of the sealing portion is larger than 0 and less than 0.2.

7. The partitioning member according to any one of claims 1 to 6, wherein
the weak seal strength portion includes a non-sealing protrusion.

8. The partitioning member according to any one of claims 1 to 7, wherein
the partitioning member has an opening temperature of lower than 98°C.

9. The partitioning member according to any one of claims 1 to 8, wherein
the partitioning member has a thermal conductivity of 0.30 [W/(m ·K)] or less after opening.

10. The partitioning member according to any one of claims 1 to 9, wherein
a temperature difference between the opening temperature of the partitioning member and a volatilization temperature of the sealed liquid is 40°C or less.

11. The partitioning member according to claim 7, wherein
strain energy of the non-sealing protrusion is 1.2 × 10⁻⁶ J or more when an internal gauge pressure of the internal space in which the liquid is sealed is 0.1 MPa.

12. A battery assembly having a configuration in which the partitioning member according to any one of claims 1 to 11 is in contact with a single cell.

13. The battery assembly according to claim 12, wherein
at least two single cells are in contact with one partitioning member.

14. The battery assembly according to claim 12 or 13, wherein
an interval from a center of gravity of the partitioning member to an opening position where the hole is open is substantially constant when the partitioning member is viewed in the thickness direction.

15. A battery pack comprising:
a battery assembly and an exhaust duct which are accommodated in a housing, wherein
the battery assembly includes the partitioning member according to any one of claims 1 to 11 and a single cell, and
when the internal pressure of the partitioning member increases and reaches a certain level or higher upon receiving heat generated from the single cell, the partitioning member opens to a surface where the duct is provided.
